# EUROPEAN PATENT APPLICATION

(11) **EP 4 827 173 A1**
(43) Date of publication of application: **21.10.2026**
(21) Application number: 24915137.4
(22) Date of filing: 23.12.2024
(51) Int. Cl.: H04W 48/08

(54) **COMMUNICATION METHOD AND COMMUNICATION APPARATUS**

(30) Priority: 04.01.2024 CN 202410028794
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); WANG, Yuan, Shenzhen, Guangdong 518129 (CN)
(74) Representative: Goddar, Heinz J.
(86) International application number: PCT/CN2024/141654
(87) International publication number: WO 2025/145922

(57) **Abstract**

This application provides a communication method and a communication apparatus, applied to the field of wireless communication. In the technical solutions provided in this application, when a user deploys a home base station and the home base station is in a closed mode, and there is a requirement for allowing a visitor terminal to access the home base station, a management terminal of the home base station may send first information to a first function network element, where the first information indicates the visitor terminal allowed to access the home base station. In this way, the first function network element may trigger, based on the first information, a procedure of updating subscription data for a visitor terminal, and store, in the subscription data for the visitor terminal, closed access group information corresponding to the home base station, so that the visitor terminal can access a network via the home base station to obtain a network service.

## Description

This application claims priority to Chinese Patent Application No. 202410028794.6, filed with the China National Intellectual Property Administration on January 4, 2024 and entitled "COMMUNICATION METHOD AND COMMUNICATION APPARATUS", which is incorporated herein by reference in its entirety.

### TECHNICAL FIELD

This application relates to the field of wireless communication, and in particular, to a communication method and a communication apparatus.

### BACKGROUND

A user may deploy a home base station (home gNB, HgNB) to increase signal coverage in an indoor area, and a closed access group mechanism is introduced into the HgNB. When the closed access group mechanism is introduced into the HgNB, and the HgNB is in a closed (closed) mode, visitor UE cannot access the HgNB.

However, in a scenario in which a HgNB is deployed and the HgNB is in a closed (closed) mode, there is a requirement for allowing visitor UE to access the HgNB. Therefore, how to meet the requirement for the visitor UE to access the HgNB becomes a technical problem to be urgently resolved.

### SUMMARY

This application provides a communication method and a communication apparatus, so that a visitor terminal can access a home base station.

According to a first aspect, this application provides a communication method. The method is applied to a first function network element, and the method includes: receiving first information from a first terminal, where the first information indicates a second terminal allowed to access a first home base station, and the first terminal is a management terminal of the first home base station; and sending second information, where the second information indicates to store indication information of a first closed access group in subscription data for the second terminal, and the first closed access group is a closed access group corresponding to the first home base station.

For example, the method may be performed by the first function network element, or may be performed by a chip system, a hardware circuit, and/or a software module used in the first function network element.

For example, the first function network element may be an application server (application server, AS) or an application function (application function, AF) network element of a third-party application that provides a service for the first home base station (home gNB, HgNB). For example, the first function network element may be provided by an operator corresponding to the first home base station or provided by a supplier corresponding to the first home base station. This is not limited herein.

For example, the management terminal of the first home base station may be understood as a terminal of a user who purchases or owns the first home base station.

It should be noted that the closed access group may support a network in performing access control on a terminal, or the network may perform access control on the terminal via the closed access group. For example, the information about the closed access group for which access is allowed is stored in the subscription data for the terminal, and the home base station broadcasts identifier information of a corresponding closed access group. When the closed access group that the terminal is allowed to access corresponds to the closed access group broadcast by the home base station, if the terminal accesses the network via the home base station, the network may allow registration and access of the terminal; or when the closed access group that the terminal is allowed to access does not correspond to the closed access group broadcast by the home base station, the network rejects a registration request from the terminal. That the closed access group that the terminal is allowed to access corresponds to the closed access group broadcast by the home base station may be understood as that information about the closed access group that the terminal is allowed to access includes the identifier information of the closed access group broadcast by the home base station.

In this technical solution, if the first closed access group is the closed access group corresponding to the first home base station, the first home base station may broadcast identifier information of the first closed access group, or the identifier information of the closed access group broadcast by the first home base station may include the identifier information of the first closed access group.

It should be noted that, from a perspective of a terminal, subscription data for one terminal may store information about one or more closed access groups for which access is allowed, and from a perspective of a closed access group, one closed access group may include one or more terminals; and from a perspective of a home base station, one home base station may broadcast identifier information of one or more closed access groups, or one home base station may correspond to/be associated with one or more closed access groups, and from a perspective of a closed access group, one closed access group may correspond to/be associated with one or more home base stations. In some embodiments, there may be a plurality of cells served by the home base station. That the home base station broadcasts the identifier information of the closed access group may be understood as that a cell served by the home base station broadcasts the identifier information of the closed access group. This is not limited herein.

The closed access group may be referred to as a closed access group (closed access group, CAG) in a 5th generation (5th generation, 5G) mobile communication system, may be referred to as a closed subscriber group (closed subscriber group, CSG) in a fourth generation (fourth generation, 4G) mobile communication system, and may have another name in a future 6th generation (6th generation, 6G) mobile communication system. This is not limited herein.

For example, the second terminal may be understood as a visitor terminal that is allowed to visit the first home base station, or the second terminal may be understood as a visitor terminal that is allowed to access the first home base station, or the second terminal may be understood as a visitor terminal that is allowed to access a network via the first home base station.

In the technical solution, when the first home base station is in a closed (closed) mode, the information about the closed access group for which the access is allowed is stored in the subscription data for the second terminal, and when the closed access group that the second terminal is allowed to access corresponds to the closed access group broadcast by the first home base station, the second terminal is allowed to access the network via the first home base station. Therefore, in a scenario in which the user deploys the first home base station and the first home base station is in the closed (closed) mode, when there is a requirement for allowing the visitor terminal to access the first home base station, the first terminal may actively send the first information to the first function network element, where the first information indicates the second terminal allowed to access the first home base station. In this way, the first function network element may trigger, based on the first information, a procedure of updating the subscription data for the second terminal, to store the indication information of the first closed access group in the subscription data for the second terminal. This helps the second terminal access the network via the first home base station, to obtain a network service.

With reference to the first aspect, in some implementations of the first aspect, the first information includes the indication information of the first closed access group and indication information of the second terminal.

In this implementation, the first information may include the indication information of the first closed access group and the indication information of the second terminal. It should be understood that the indication information of the first closed access group may indicate the closed access group corresponding to the first home base station, for example, the first closed access group, and the indication information of the second terminal may indicate the second terminal.

With reference to the first aspect, in some implementations of the first aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an identifier (identity, ID) of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the first aspect, in some implementations of the first aspect, the indication information of the second terminal includes a generic public subscription identifier GPSI and/or a global system for mobile communications GSM number of the second terminal.

In this implementation, the second terminal may be indicated by using the generic public subscription identifier (generic public subscription identifier, GPSI) and/or the global system for mobile communications (global system for mobile communications, GSM) number of the second terminal, and the GSM number may be understood as a phone number of the second terminal.

In some embodiments, the second terminal may alternatively be indicated by using a subscription concealed identifier (subscription concealed identifier, SUCI), a 5G globally unique temporary UE identity (globally unique temporary UE identity, 5G-GUT), a permanent equipment identifier (permanent equipment identifier, PEI), or another identifier of the second terminal. This is not specifically limited herein.

With reference to the first aspect, in some implementations of the first aspect, the first information further includes a restriction condition for the second terminal to access the first home base station.

In this implementation, the first information may further include a restriction condition for the second terminal to access the first home base station, so that the second terminal can access the first home base station only under the restriction condition.

With reference to the first aspect, in some implementations of the first aspect, the restriction condition includes at least one of the following conditions: time of use, duration of use, location of use, or bandwidth for use.

In this implementation, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The v may indicate a network bandwidth that can be used by the second terminal after the second terminal visits the first home base station. For example, the bandwidth for use may be 20 megahertz (MHz).

According to a second aspect, this application provides a communication method. The method is applied to a first terminal, and the method includes: determining first information, where the first information indicates a second terminal allowed to access a first home base station, and the first terminal is a management terminal of the first home base station; and sending the first information to a first function network element.

For example, the method may be performed by the first terminal, or may be performed by a chip system, a hardware circuit, and/or a software module used in the first terminal.

For example, the management terminal of the first home base station may be understood as a terminal of a user who purchases or owns the first home base station.

For example, the second terminal may be understood as a visitor terminal that is allowed to visit the first home base station, or the second terminal may be understood as a visitor terminal that is allowed to access the first home base station, or the second terminal may be understood as a visitor terminal that is allowed to access a network via the first home base station.

For example, the first function network element may be an application server (application server, AS) or an application function (application function, AF) network element of a third-party application that provides a service for the first home base station (home gNB, HgNB). For example, the first function network element may be provided by an operator corresponding to the first home base station or provided by a supplier corresponding to the first home base station. This is not limited herein.

In this technical solution, in a scenario in which the user deploys the first home base station and the first home base station is in a closed (closed) mode, when there is a requirement for allowing the visitor terminal to access the first home base station, the first terminal may actively send the first information to the first function network element, where the first information indicates the second terminal allowed to access the first home base station. In this way, the first function network element may trigger, based on the first information, a procedure of updating subscription data for the second terminal, to store indication information of a first closed access group in the subscription data for the second terminal. This helps the second terminal access the first home base station, to obtain a network service.

With reference to the second aspect, in some implementations of the second aspect, the first information includes indication information of a first closed access group and indication information of the second terminal, and the first closed access group is a closed access group corresponding to the first home base station.

For example, if the first closed access group is the closed access group corresponding to the first home base station, the first home base station may broadcast identifier information of the first closed access group, or the identifier information of the closed access group broadcast by the first home base station may include the identifier information of the first closed access group.

In this implementation, the first information may include the indication information of the first closed access group and the indication information of the second terminal. The indication information of the first closed access group may indicate the closed access group corresponding to the first home base station, for example, the first closed access group. The indication information of the second terminal may indicate the second terminal.

With reference to the second aspect, in some implementations of the second aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the second aspect, in some implementations of the second aspect, the indication information of the second terminal includes a GPSI and/or a GSM number of the second terminal.

In this implementation, the second terminal may be indicated by using a GPSI and/or a GSM number of the second terminal, and the GSM number may be understood as a phone number of the second terminal.

In some embodiments, the second terminal may alternatively be indicated by using a SUCI, a 5G-GUT, a PEI, or another identifier of the second terminal. This is not specifically limited herein.

With reference to the second aspect, in some implementations of the second aspect, the first information further includes a restriction condition for the second terminal to access the first home base station.

In this implementation, the first information may further include a restriction condition for the second terminal to access the first home base station, so that the second terminal can access the first home base station only under the restriction condition.

With reference to the second aspect, in some implementations of the second aspect, the restriction condition includes at least one of the following conditions: time of use, duration of use, location of use, or bandwidth for use.

In this implementation, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

According to a third aspect, this application provides a communication method. The method is applied to a first function network element, and the method includes: receiving first information from a first terminal, where the first information indicates a restriction condition for a visitor terminal to access a first home base station, and the first terminal is a management terminal of the first home base station; receiving third information from a second terminal, where the third information includes a verification condition for the second terminal to access the first home base station, indication information of a first closed access group, and indication information of the second terminal, and the first closed access group is a closed access group corresponding to the first home base station; and sending second information when the verification condition meets the restriction condition, where the second information indicates to store the indication information of the first closed access group in subscription data for the second terminal.

For example, the method may be performed by the first function network element, or may be performed by a chip system, a hardware circuit, and/or a software module used in the first function network element.

For example, the first function network element may be an AS or an AF network element of a third-party application that provides a service for the first home base station. For example, the first function network element may be provided by an operator corresponding to the first home base station or provided by a supplier corresponding to the first home base station. This is not limited herein.

For example, the management terminal of the first home base station may be understood as a terminal of a user who purchases or owns the first home base station.

It should be noted that the closed access group may support a network in performing access control on a terminal, or the network may perform access control on the terminal via the closed access group. For example, the information about the closed access group for which access is allowed is stored in the subscription data for the terminal, and the home base station broadcasts identifier information of a corresponding closed access group. When the closed access group that the terminal is allowed to access corresponds to the closed access group broadcast by the home base station, if the terminal accesses the network via the home base station, the network may allow registration and access of the terminal; or when the closed access group that the terminal is allowed to access does not correspond to the closed access group broadcast by the home base station, the network rejects a registration request from the terminal. That the closed access group that the terminal is allowed to access corresponds to the closed access group broadcast by the home base station may be understood as that information about the closed access group that the terminal is allowed to access includes the identifier information of the closed access group broadcast by the home base station.

In this technical solution, if the first closed access group is the closed access group corresponding to the first home base station, the first home base station may broadcast identifier information of the first closed access group, or the identifier information of the closed access group broadcast by the first home base station may include the identifier information of the first closed access group.

It should be noted that, from a perspective of a terminal, subscription data for one terminal may store information about one or more closed access groups for which access is allowed, and from a perspective of a closed access group, one closed access group may include one or more terminals; and from a perspective of a home base station, one home base station may broadcast identifier information of one or more closed access groups, or one home base station may correspond to/be associated with one or more closed access groups, and from a perspective of a closed access group, one closed access group may correspond to/be associated with one or more home base stations. In some embodiments, there may be a plurality of cells served by the home base station. That the home base station broadcasts the identifier information of the closed access group may be understood as that a cell served by the home base station broadcasts the identifier information of the closed access group. This is not limited herein.

The closed access group may be referred to as a CAG in a 5G mobile communication system, may be referred to as a CSG in a 4G mobile communication system, and may have another name in a future 6G mobile communication system. This is not limited herein.

For example, the second terminal may be understood as a visitor terminal that requests to visit the first home base station, or the second terminal may be understood as a visitor terminal that requests to access the first home base station, or the second terminal may be understood as a visitor terminal that requests to access a network via the first home base station.

In the technical solution, when the first home base station is in a closed (closed) mode, the information about the closed access group for which the access is allowed is stored in the subscription data for the second terminal, and when the closed access group that the second terminal is allowed to access corresponds to the closed access group broadcast by the first home base station, the second terminal is allowed to access the network via the first home base station. Therefore, in a scenario in which the user deploys the first home base station and the first home base station is in the closed (closed) mode, when there is a requirement for allowing the visitor terminal to access the first home base station, the first terminal may send first information to the first function network element, where the first information indicates the restriction condition for the visitor terminal to access the first home base station. In this way, when the second terminal provides the verification condition for the first function network element, the first function network element may verify the verification condition by using the restriction condition. If the verification condition meets the restriction condition, the first function network element may trigger a procedure of updating the subscription data for the second terminal, to store the indication information of the first closed access group in the subscription data for the second terminal. This helps the second terminal access the first home base station to obtain a network service.

With reference to the third aspect, in some implementations of the third aspect, the first information includes the indication information of the first closed access group and indication information of the restriction condition.

In this implementation, the first information may include the indication information of the first closed access group and the indication information of the restriction condition. It should be understood that the indication information of the first closed access group may indicate that the closed access group corresponding to the first home base station, for example, the first closed access group, and the indication information of the restriction condition indicates the restriction condition for the visitor terminal to access the first home base station.

With reference to the third aspect, in some implementations of the third aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the third aspect, in some implementations of the third aspect, the restriction condition includes at least one of the following conditions: time of use, duration of use, location of use, key for use, password for use, or bandwidth for use.

For example, the key may include a public key and a private key.

For example, when the restriction condition includes the key for use, the second terminal may generate encrypted data by using the public key. If the first function network element may decrypt the encrypted data by using the private key, it is considered that the second terminal can access the first home base station.

For example, when the restriction condition includes the password for use, and the second terminal enters correct password information, it may be considered that the second terminal can access the first home base station, and the correct password information may be understood as the password for use in the restriction condition.

For example, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

With reference to the third aspect, in some implementations of the third aspect, the method further includes: when the verification condition meets the restriction condition, sending fourth information to the second terminal, where the fourth information indicates that the second terminal is allowed to access the first home base station.

In this implementation, when the first function network element is the AS, if the verification condition meets the restriction condition, the AS may directly send the fourth information to the second terminal, to indicate that the second terminal is allowed to access the first home base station.

For example, the fourth information may include the ID of the first closed access group.

According to a fourth aspect, this application provides a communication method. The method is applied to a first terminal, and the method includes: determining first information, where the first information indicates a restriction condition for a visitor terminal to access a first home base station, and the first terminal is a management terminal of the first home base station; and sending the first information to a first function network element.

For example, the method may be performed by the first terminal, or may be performed by a chip system, a hardware circuit, and/or a software module used in the first terminal.

For example, the management terminal of the first home base station may be understood as a terminal of a user who purchases or owns the first home base station.

For example, the first function network element may be an application server (application server, AS) or an application function (application function, AF) network element of a third-party application that provides a service for the first home base station (home gNB, HgNB). For example, the first function network element may be provided by an operator corresponding to the first home base station or provided by a supplier corresponding to the first home base station. This is not limited herein.

In this technical solution, in a scenario in which the user deploys the first home base station and the first home base station is in a closed (closed) mode, when there is a requirement for allowing the visitor terminal to access the first home base station, the first terminal may send first information to the first function network element, where the first information indicates the restriction condition for the visitor terminal to access the first home base station. In this way, when the second terminal provides a verification condition for the first function network element, the first function network element may verify the verification condition by using the restriction condition. If the verification condition meets the restriction condition, the first function network element may trigger a procedure of updating subscription data for the second terminal, to store indication information of a first closed access group in the subscription data for the second terminal. This helps the second terminal access the first home base station to obtain a network service. In this technical solution, the first terminal does not need to send the first information to the first function network element each time there is a requirement for allowing the visitor terminal to access the first home base station, so that power consumption is reduced.

With reference to the fourth aspect, in some implementations of the fourth aspect, the first information includes indication information of a first closed access group and indication information of the restriction condition, and the first closed access group is a closed access group corresponding to the first home base station.

In this implementation, if the first closed access group is the closed access group corresponding to the first home base station, the first home base station may broadcast identifier information of the first closed access group, or the identifier information of the closed access group broadcast by the first home base station may include the identifier information of the first closed access group.

In this implementation, the first information may include the indication information of the first closed access group and the indication information of the restriction condition. It should be understood that the indication information of the first closed access group may indicate that the closed access group corresponding to the first home base station, for example, the first closed access group, and the indication information of the restriction condition indicates the restriction condition for the visitor terminal to access the first home base station.

With reference to the fourth aspect, in some implementations of the fourth aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the fourth aspect, in some implementations of the fourth aspect, the restriction condition includes at least one of the following conditions: time of use, duration of use, location of use, key for use, password for use, or bandwidth for use.

For example, the key may include a public key and a private key.

For example, when the restriction condition includes the key for use, the second terminal may generate encrypted data by using the public key. If the first function network element may decrypt the encrypted data by using the private key, it is considered that the second terminal can access the first home base station.

For example, when the restriction condition includes the password for use, and the second terminal enters correct password information, it is considered that the second terminal can access the first home base station, and the correct password information may be understood as the password for use in the restriction condition.

For example, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

According to a fifth aspect, this application provides a communication method. The method is applied to a second terminal, and the method further includes: sending third information to a first function network element, where the third information includes a verification condition for the second terminal to access a first home base station, indication information of a first closed access group, and indication information of the second terminal, and the first closed access group is a closed access group corresponding to the first home base station; and receiving fourth information from the first function network element, where the fourth information indicates that the second terminal is allowed to access the first home base station.

For example, the method may be performed by the second terminal, or may be performed by a chip system, a hardware circuit, and/or a software module used in the second terminal.

For example, the second terminal may be understood as a visitor terminal that requests to visit the first home base station, or the second terminal may be understood as a visitor terminal that requests to access the first home base station, or the second terminal may be understood as a visitor terminal that requests to access a network via the first home base station.

For example, the first function network element may be an AS or an AF network element of a third-party application that provides a service for the first home base station. For example, the first function network element may be provided by an operator corresponding to the first home base station or provided by a supplier corresponding to the first home base station. This is not limited herein.

In this technical solution, if the first closed access group is the closed access group corresponding to the first home base station, the first home base station may broadcast identifier information of the first closed access group, or the identifier information of the closed access group broadcast by the first home base station may include the identifier information of the first closed access group.

In this technical solution, if the second terminal needs to access the first home base station to obtain a network service, the second terminal may send the third information to the first function network element, where the third information indicates the verification condition for the second terminal to access the first home base station. If the verification condition reported by the second terminal meets a restriction condition set by a management terminal of the first home base station, the first function network element may trigger a procedure of updating subscription data for the second terminal, to store the indication information of the first closed access group in the subscription data for the second terminal. This helps the second terminal access the first home base station. In this technical solution, the second terminal may send the third information to the first function network element at any moment at which the second terminal needs to access the first home base station, to request to access the first home base station. This improves flexibility of accessing the first home base station by the second terminal.

With reference to the fifth aspect, in some implementations of the fifth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

For example, the management terminal of the first home base station may be understood as a terminal of a user who purchases or owns the first home base station.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the fifth aspect, in some implementations of the fifth aspect, the indication information of the second terminal includes a GPSI and/or a GSM number of the second terminal.

In this implementation, the second terminal may be indicated by using a GPSI and/or a GSM number of the second terminal, and the GSM number may be understood as a phone number of the second terminal.

In some embodiments, the second terminal may alternatively be indicated by using a SUCI, a 5G-GUT, a PEI, or another identifier of the second terminal. This is not specifically limited herein.

According to a sixth aspect, this application provides a communication method. The method is applied to an access and mobility management function AMF network element, and the method includes: sending fifth information to a second function network element, where the fifth information is used to request to determine whether a second terminal is allowed to access a first home base station, and the fifth information includes indication information of the second terminal; and receiving sixth information from the second function network element, where the sixth information indicates whether the second terminal is allowed to access the first home base station.

In an example, the method may be performed by an access and mobility management function (access and mobility management function, AMF) network element, or may be performed by a chip system, a hardware circuit, and/or a software module used in an AMF network element.

For example, the second terminal may be understood as a visitor terminal that requests to visit the first home base station, or the second terminal may be understood as a visitor terminal that requests to access the first home base station, or the second terminal may be understood as a visitor terminal that requests to access a network via the first home base station.

For example, the second function network element may be understood as a function network element newly added to a core network in this application. The second function network element may be configured to store temporary closed access group information for the visitor terminal. The second function network element may also be referred to as a closed access group management network element. This is not limited in this application. The temporary closed access group information for the visitor terminal may be understood as information about a closed access group that the visitor terminal is allowed to access. If the closed access group that the visitor terminal is allowed to access corresponds to a closed access group broadcast by the first home base station, the visitor terminal accesses the network via the first home base station, and the network may allow registration and access of the visitor terminal. That the closed access group that the terminal is allowed to access corresponds to the closed access group broadcast by the first home base station may be understood as that information about the closed access group that the terminal is allowed to access includes identifier information of the closed access group broadcast by the first home base station.

In this technical solution, when the second terminal requests to access the first home base station, the AMF network element may send the fifth information to the second function network element, to indicate the second function network element to determine whether the second terminal is allowed to access the first home base station. After determining whether the second terminal is allowed to access the first home base station, the second function network element may send the sixth information to the AMF network element. In this technical solution, the AMF network element may directly determine, based on the sixth information, whether the second terminal is allowed to access the first home base station, without triggering a procedure of updating subscription data for the second terminal, so that power consumption is reduced.

With reference to the sixth aspect, in some implementations of the sixth aspect, the indication information of the second terminal includes a GPSI and/or a GSM number of the second terminal.

In this implementation, the second terminal may be indicated by using a GPSI and/or a GSM number of the second terminal, and the GSM number may be understood as a phone number of the second terminal.

In some embodiments, the second terminal may alternatively be indicated by using a SUCI, a 5G-GUT, a PEI, or another identifier of the second terminal. This is not specifically limited herein.

With reference to the sixth aspect, in some implementations of the sixth aspect, the fifth information further includes indication information of a first closed access group, and the first closed access group is a closed access group corresponding to the first home base station.

In this implementation, if the first closed access group is the closed access group corresponding to the first home base station, the first home base station may broadcast identifier information of the first closed access group, or the identifier information of the closed access group broadcast by the first home base station may include the identifier information of the first closed access group.

In this implementation, the AMF network element may further send the indication information of the first closed access group to the second function network element, so that the second function network element can determine, based on the indication information of the first closed access group, that a base station that the second terminal requests to access is the first home base station, and determines, based on the stored temporary closed access group information for the visitor terminal, whether the second terminal is allowed to access the first home base station. The temporary closed access group information for the visitor terminal may be understood as information about a closed access group that the visitor terminal is allowed to access. In this implementation, the second function network element may store the temporary closed access group information for the visitor terminal, and does not need to store, in subscription data for the visitor terminal, the information about the closed access group for which access is allowed, so that a procedure of updating the subscription data for the second terminal does not need to be triggered, thereby reducing power consumption.

With reference to the sixth aspect, in some implementations of the sixth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

For example, the management terminal of the first home base station may be understood as a terminal of a user who purchases or owns the first home base station.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the sixth aspect, in some implementations of the sixth aspect, the sixth information includes indication information indicating whether the second terminal is allowed to access the first home base station and/or information about a closed access group that the second terminal is allowed to access.

For example, the sixth information may explicitly indicate whether the second terminal is allowed to access the first home base station. For example, the sixth information may include indication information indicating that the second terminal is allowed to access the first home base station, or may include indication information indicating that the second terminal is not allowed to access the first home base station. For example, the sixth information may be a field with a length of 1 bit. When the sixth information is "1", it indicates that the second terminal is allowed to access the first home base station; or when the sixth information is "0", it indicates that the second terminal is not allowed to access the first home base station; or when the sixth information is "0", it indicates that the second terminal is allowed to access the first home base station; or when the sixth information is "1", it indicates that the second terminal is not allowed to access the first home base station. This is not limited herein.

For example, the sixth information may implicitly indicate whether the second terminal is allowed to access the first home base station. For example, when the temporary closed access group information for the visitor terminal stored in the second function network element includes temporary closed access group information for the second terminal, the sixth information may include the information about the closed access group that the second terminal is allowed to access, so that the AMF network element can autonomously determine, based on the sixth information, whether the second terminal is allowed to access the first home base station.

With reference to the sixth aspect, in some implementations of the sixth aspect, when the sixth information includes the information about the closed access group that the second terminal is allowed to access, the method further includes: when the information about the closed access group that the second terminal is allowed to access includes closed access group information corresponding to the first home base station, allowing the second terminal to access the first home base station.

In this implementation, when the sixth information includes the information about the closed access group that the second terminal is allowed to access, the AMF network element can autonomously determine, based on the sixth information, whether the second terminal is allowed to access the first home base station. For example, if the information about the closed access group that the second terminal is allowed to access includes identifier information of a closed access group broadcast by the first home base station, it is considered that the closed access group that the second terminal is allowed to access corresponds to the closed access group broadcast by the first home base station, and in this case, the second terminal is allowed to access the first home base station; or if the information about the closed access group that the second terminal is allowed to access does not include identifier information of a closed access group broadcast by the first home base station, it is considered that the closed access group that the second terminal is allowed to access does not correspond to the closed access group broadcast by the first home base station, and in this case, the second terminal is not allowed to access the first home base station.

With reference to the sixth aspect, in some implementations of the sixth aspect, before sending the fifth information to the second function network element, the method further includes: receiving seventh information from a second terminal, where the seventh information indicates that the second terminal is a visitor terminal; and determining the fifth information based on the seventh information.

In this implementation, when the second terminal needs to access the first home base station to obtain a network service, the second terminal may send a registration request message to the AMF network element, where the registration request message may carry the seventh information, to indicate that the second terminal is the visitor terminal. After determining that the second terminal is the visitor terminal, the AMF network element may send the fifth information to the second function network element, so that power consumption is reduced.

According to a seventh aspect, this application provides a communication method. The method is applied to a second function network element, and the method includes: receiving fifth information from an AMF network element, where the fifth information is used to request to determine whether a second terminal is allowed to access a first home base station, and the fifth information includes indication information of the second terminal; and sending sixth information to the AMF network element, where the sixth information indicates whether the second terminal is allowed to access the first home base station.

For example, the method may be performed by the second function network element, or may be performed by a chip system, a hardware circuit, and/or a software module used in the second function network element.

For example, the second terminal may be understood as a visitor terminal that requests to visit the first home base station, or the second terminal may be understood as a visitor terminal that requests to access the first home base station, or the second terminal may be understood as a visitor terminal that requests to access a network via the first home base station.

For example, the second function network element may be a function network element newly added to a core network in this application. The second function network element may be configured to store temporary closed access group information for the visitor terminal. The second function network element may also be referred to as a closed access group management network element. This is not limited in this application. The temporary closed access group information for the visitor terminal may be understood as information about a closed access group that the visitor terminal is allowed to access. If the closed access group that the visitor terminal is allowed to access corresponds to a closed access group broadcast by the first home base station, the visitor terminal accesses the network via the first home base station, and the network may allow registration and access of the visitor terminal. That the closed access group that the terminal is allowed to access corresponds to the closed access group broadcast by the first home base station may be understood as that information about the closed access group that the terminal is allowed to access includes identifier information of the closed access group broadcast by the first home base station.

In this technical solution, after receiving the fifth information sent by the AMF network element, the second function network element may determine, based on the indication information of the second terminal in the fifth information, that the visitor terminal is the second terminal, determine whether there is temporary closed access group information for the second terminal in the stored temporary closed access group information for the visitor terminal, and then determine whether the second terminal is allowed to access the first home base station. For example, if the stored temporary closed access group information for the visitor terminal does not include the temporary closed access group information for the second terminal, the second terminal is not allowed to access the first home base station. The second function network element may further send the sixth information to the AMF network element, to indicate whether the second terminal is allowed to access the first home base station. In this technical solution, a procedure of updating subscription data for the second terminal does not need to be triggered, so that power consumption is reduced.

With reference to the seventh aspect, in some implementations of the seventh aspect, the fifth information further includes indication information of a first closed access group, and the first closed access group is a closed access group corresponding to the first home base station.

In this implementation, if the first closed access group is the closed access group corresponding to the first home base station, the first home base station may broadcast identifier information of the first closed access group, or the identifier information of the closed access group broadcast by the first home base station may include the identifier information of the first closed access group.

In this implementation, the second function network element may determine, based on the indication information of the first closed access group, that a base station that the second terminal requests to access is the first home base station, and determine, based on the stored temporary closed access group information for the visitor terminal and the indication information of the first closed access group, whether the second terminal is allowed to access the first home base station. In this implementation, the second function network element may store the temporary closed access group information for the visitor terminal, and does not need to store, in subscription data for the visitor terminal, the information about the closed access group for which access is allowed, so that a procedure of updating the subscription data for the second terminal does not need to be triggered, thereby reducing power consumption.

With reference to the seventh aspect, in some implementations of the seventh aspect, the sixth information includes indication information indicating whether the second terminal is allowed to access the first home base station and/or information about a closed access group that the second terminal is allowed to access.

For example, the sixth information may explicitly indicate whether the second terminal is allowed to access the first home base station. For example, the sixth information may include indication information indicating that the second terminal is allowed to access the first home base station, or may include indication information indicating that the second terminal is not allowed to access the first home base station. For example, the sixth information may be a field with a length of 1 bit. When the sixth information is "1", it indicates that the second terminal is allowed to access the first home base station; or when the sixth information is "0", it indicates that the second terminal is not allowed to access the first home base station; or when the sixth information is "0", it indicates that the second terminal is allowed to access the first home base station; or when the sixth information is "1", it indicates that the second terminal is not allowed to access the first home base station. This is not limited herein.

For example, the sixth information may implicitly indicate whether the second terminal is allowed to access the first home base station. For example, when the temporary closed access group information for the visitor terminal stored in the second function network element includes the temporary closed access group information for the second terminal, the sixth information may include the temporary closed access group information for the second terminal, so that the AMF network element can autonomously determine, based on the sixth information, whether the second terminal is allowed to access the first home base station.

With reference to the seventh aspect, in some implementations of the seventh aspect, before sending the sixth information to the AMF network element, the method further includes: determining, based on the fifth information and the information about the closed access group that the second terminal is allowed to access, whether the second terminal is allowed to access the first home base station.

For example, if the information about the closed access group that the second terminal is allowed to access includes identifier information of a closed access group broadcast by the first home base station, it is considered that the closed access group that the second terminal is allowed to access corresponds to the closed access group broadcast by the first home base station, and in this case, the second terminal is allowed to access the first home base station; or if the information about the closed access group that the second terminal is allowed to access does not include identifier information of a closed access group broadcast by the first home base station, it is considered that the closed access group that the second terminal is allowed to access does not correspond to the closed access group broadcast by the first home base station, and in this case, the second terminal is not allowed to access the first home base station.

With reference to the seventh aspect, in some implementations of the seventh aspect, the method further includes: receiving first information from a first terminal, where the first information indicates a second terminal allowed to access the first home base station, and the first terminal is a management terminal of the first home base station; and determining, based on the first information, information about a closed access group that the second terminal is allowed to access.

For example, the management terminal of the first home base station may be understood as a terminal of a user who purchases or owns the first home base station.

In this implementation, in a scenario in which the user deploys the first home base station and the first home base station is in a closed (closed) mode, when there is a requirement for allowing the visitor terminal to access the first home base station, the first terminal may actively send the first information to the second function network element, where the first information indicates the second terminal allowed to access the first home base station. In this way, the second function network element may determine and store, based on the first information, the information about the closed access group that the second terminal is allowed to access, for subsequent invocation.

For example, the first terminal may send the first information to the second function network element via a second AMF network element, to indicate the second function network element to determine the information about the closed access group that the second terminal is allowed to access.

With reference to the seventh aspect, in some implementations of the seventh aspect, the first information includes the indication information of the first closed access group and indication information of the second terminal.

In this implementation, the first information may include the indication information of the first closed access group and the indication information of the second terminal. The indication information of the first closed access group may indicate the closed access group corresponding to the first home base station, for example, the first closed access group. The indication information of the second terminal may indicate the second terminal.

With reference to the seventh aspect, in some implementations of the seventh aspect, the indication information of the second terminal includes a GPSI and/or a GSM number of the second terminal.

In this implementation, the second terminal may be indicated by using a GPSI and/or a GSM number of the second terminal, and the GSM number may be understood as a phone number of the second terminal.

In some embodiments, the second terminal may alternatively be indicated by using a SUCI, a 5G-GUT, a PEI, or another identifier of the second terminal. This is not specifically limited herein.

With reference to the seventh aspect, in some implementations of the seventh aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the second function network element may determine, based on the identifier of the first terminal, the closed access group that the first terminal is allowed to access, to determine the identifier of the first closed access group.

With reference to the seventh aspect, in some implementations of the seventh aspect, the first information further includes a restriction condition for the second terminal to access the first home base station.

In this implementation, the first information may further include the restriction condition for the second terminal to access the first home base station. In this way, the second function network element can store the restriction condition in the information about the closed access group that the second terminal is allowed to access, so that the second terminal can access the first home base station only under the restriction condition.

With reference to the seventh aspect, in some implementations of the seventh aspect, the restriction condition includes at least one of the following conditions: time of use, duration of use, location of use, or bandwidth for use.

In this implementation, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

According to an eighth aspect, this application provides a communication method. The method is applied to a first AMF network element, and the method includes: receiving seventh information from a second terminal, where the seventh information indicates that the second terminal is a visitor terminal; and determining, based on the seventh information, whether the second terminal is allowed to access a first home base station.

For example, the method may be performed by the first AMF network element, or may be performed by a chip system, a hardware circuit, and/or a software module used in the first AMF network element.

For example, the second terminal may be understood as a visitor terminal that requests to visit the first home base station, or the second terminal may be understood as a visitor terminal that requests to access the first home base station, or the second terminal may be understood as a visitor terminal that requests to access a network via the first home base station.

In this implementation, the first AMF network element may be configured to store temporary closed access group information for the visitor terminal. The temporary closed access group information for the visitor terminal may be understood as information about a closed access group that the visitor terminal is allowed to access. If the closed access group that the visitor terminal is allowed to access corresponds to a closed access group broadcast by the first home base station, the visitor terminal accesses the network via the first home base station, and the network may allow registration and access of the visitor terminal. That the closed access group that the terminal is allowed to access corresponds to the closed access group broadcast by the first home base station may be understood as that information about the closed access group that the terminal is allowed to access includes identifier information of the closed access group broadcast by the first home base station.

In this technical solution, when the second terminal needs to access the first home base station to obtain a network service, the second terminal may send a registration request message to the first AMF network element, where the registration request message may carry the seventh information, to indicate that the second terminal is a visitor terminal. After determining that the second terminal is the visitor terminal, the first AMF network element may determine, based on the stored temporary closed access group information for the visitor terminal, whether the second terminal is allowed to access the first home base station. For example, if the stored temporary closed access group information for the visitor terminal does not include temporary closed access group information for the second terminal, the second terminal is not allowed to access the first home base station; or if the stored temporary closed access group information for the visitor terminal includes the temporary closed access group information for the second terminal, and the temporary closed access group information for the second terminal includes the identifier information of the closed access group broadcast by the first home base station, the second terminal is allowed to access the first home base station. The first AMF network element may obtain, from the first home base station, the identifier information of the closed access group broadcast by the first home base station. In this technical solution, the first AMF network element may store the temporary closed access group information for the visitor terminal, so that a procedure of updating subscription data for the visitor terminal does not need to be triggered, thereby reducing power consumption.

With reference to the eighth aspect, in some implementations of the eighth aspect, the method further includes: receiving first information from a first terminal, where the first information indicates a visitor terminal allowed to access the first home base station, and the first terminal is a management terminal of the first home base station; and determining, based on the first information, information about a closed access group that the visitor terminal is allowed to access.

For example, the management terminal of the first home base station may be understood as a terminal of a user who purchases or owns the first home base station.

In this implementation, in a scenario in which the user deploys the first home base station and the first home base station is in a closed (closed) mode, when there is a requirement for allowing the visitor terminal to access the first home base station, the first terminal may actively send the first information to the first AMF network element, where the first information indicates the visitor terminal allowed to access the first home base station. In this way, the first AMF network element may determine and store, based on the first information, the information about the closed access group that the visitor terminal is allowed to access, for subsequent invocation.

With reference to the eighth aspect, in some implementations of the eighth aspect, the first information includes indication information of a first closed access group and indication information of the visitor terminal, and the first closed access group is a closed access group corresponding to the first home base station.

In this implementation, the first information may include the indication information of the first closed access group and the indication information of the visitor terminal. The indication information of the first closed access group may indicate the closed access group corresponding to the first home base station, for example, a cell of the first closed access group. The indication information of the visitor terminal may indicate the visitor terminal.

With reference to the eighth aspect, in some implementations of the eighth aspect, the indication information of the visitor terminal includes a GPSI and/or a GSM number of the visitor terminal.

In this implementation, the visitor terminal may be indicated by using a GPSI and/or a GSM number of the visitor terminal, and the GSM number may be understood as a phone number of the visitor terminal.

In some embodiments, the visitor terminal may alternatively be indicated by using a SUCI, a 5G-GUT, a PEI, or another identifier of the visitor terminal. This is not specifically limited herein.

With reference to the eighth aspect, in some implementations of the eighth aspect, the indication information of the first closed access group includes an identifier of the first closed access group and/or an identifier of the first terminal, the identifier of the first terminal is used to determine the identifier of the first closed access group.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first AMF network element may determine, based on the identifier of the first terminal, the closed access group that the first terminal is allowed to access, to determine the identifier of the first closed access group.

With reference to the eighth aspect, in some implementations of the eighth aspect, the first information further includes a restriction condition for the visitor terminal to access the first home base station.

In this implementation, the first information may further include the restriction condition for the second terminal to access the first home base station. In this way, the first AMF network element can store the restriction condition in the information about the closed access group that the second terminal is allowed to access, so that the second terminal can access the first home base station only under the restriction condition.

With reference to the eighth aspect, in some implementations of the eighth aspect, the restriction condition includes at least one of the following conditions: time of use, duration of use, location of use, or bandwidth for use.

In this implementation, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

According to a ninth aspect, this application provides a communication method. The method is applied to a unified data management UDM network element, and the method includes: receiving second information, where the second information indicates to store indication information of a first closed access group in subscription data for a second terminal, and the first closed access group is a closed access group corresponding to a first home base station; and storing the indication information of the first closed access group in the subscription data for the second terminal based on the second information.

In an example, the method may be performed by the unified data management (unified data management, UDM) network element, or may be performed by a chip system, a hardware circuit, and/or a software module used in the UDM network element.

It should be noted that the closed access group may support a network in performing access control on a terminal, or the network may perform access control on the terminal via the closed access group. For example, the information about the closed access group for which access is allowed is stored in the subscription data for the terminal, and the home base station broadcasts identifier information of a corresponding closed access group. When the closed access group that the terminal is allowed to access corresponds to the closed access group broadcast by the home base station, if the terminal accesses the network via the home base station, the network may allow registration and access of the terminal; or when the closed access group that the terminal is allowed to access does not correspond to the closed access group broadcast by the home base station, the network rejects a registration request from the terminal. That the closed access group that the terminal is allowed to access corresponds to the closed access group broadcast by the first home base station may be understood as that information about the closed access group that the terminal is allowed to access includes the identifier information of the closed access group broadcast by the first home base station.

In this technical solution, if the first closed access group is the closed access group corresponding to the first home base station, the first home base station may broadcast identifier information of the first closed access group, or the identifier information of the closed access group broadcast by the first home base station may include the identifier information of the first closed access group.

For example, the second terminal may be understood as a visitor terminal that is allowed to visit the first home base station, or the second terminal may be understood as a visitor terminal that is allowed to access the first home base station, or the second terminal may be understood as a visitor terminal that is allowed to access a network via the first home base station.

In the technical solution, when the first home base station is in a closed (closed) mode, the information about the closed access group for which the access is allowed is stored in the subscription data for the second terminal, and when the closed access group that the second terminal is allowed to access corresponds to the closed access group broadcast by the first home base station, the second terminal is allowed to access the network via the first home base station. Therefore, in a scenario in which a user deploys the first home base station and the first home base station is in a closed (closed) mode, when there is a requirement for allowing the visitor terminal to access the first home base station, the first terminal may actively report, to the first function network element, a restriction condition that the second terminal is allowed to access the first home base station or the visitor terminal accesses the first home base station, so that the first function network element may send the second information to the UDM network element, to trigger a procedure of updating the subscription data for the second terminal. Correspondingly, after receiving the second information, the UDM network element may update the subscription data for the second terminal based on the second information, that is, store the indication information of the first closed access group in the subscription data for the second terminal, so that the second terminal can access the network via the first home base station, to obtain a network service.

With reference to the ninth aspect, in some implementations of the ninth aspect, the second information includes the indication information of the first closed access group and indication information of the second terminal.

In this implementation, the first information may include the indication information of the first closed access group and the indication information of the second terminal. It should be understood that the indication information of the first closed access group may indicate the closed access group corresponding to the first home base station, for example, the first closed access group, and the indication information of the second terminal may indicate the second terminal.

With reference to the ninth aspect, in some implementations of the ninth aspect, the indication information of the second terminal includes a GPSI and/or a GSM number of the second terminal.

In this implementation, the second terminal may be indicated by using a GPSI and/or a GSM number of the second terminal, and the GSM number may be understood as a phone number of the second terminal.

In some embodiments, the second terminal may alternatively be indicated by using a SUCI, a 5G-GUT, a PEI, or another identifier of the second terminal. This is not specifically limited herein.

With reference to the ninth aspect, in some implementations of the ninth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

In this implementation, the indication information of the first closed access group may include an identifier of the first closed access group, for example, an ID of the first closed access group. The ID of the first closed access group may be an ID of a closed access group configured by the operator for the first home base station.

In this implementation, because the first terminal is the management terminal of the first home base station, closed access group information stored in subscription data for the first terminal may include the ID of the first closed access group. Therefore, the ID of the first closed access group may be implicitly indicated by using an identifier of the first terminal. For example, the first function network element may determine, based on the identifier of the first terminal, the closed access group that the first terminal is allowed to access, to determine the identifier of the first closed access group.

With reference to the ninth aspect, in some implementations of the ninth aspect, the second information further includes a restriction condition for the second terminal to access the first home base station.

In this implementation, the first information may further include the restriction condition for the second terminal to access the first home base station. In this way, the UDM network element can store the restriction condition in the information about the closed access group that the second terminal is allowed to access or the subscription data, so that the second terminal can access the first home base station only under the restriction condition.

With reference to the ninth aspect, in some implementations of the ninth aspect, the restriction condition includes at least one of the following conditions: time of use, duration of use, location of use, or bandwidth for use.

In this implementation, the time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal visits the first home base station. For example, the bandwidth for use may be 20 MHz.

With reference to the ninth aspect, in some implementations of the ninth aspect, the method further includes: sending eighth information, where the eighth information includes the indication information of the first closed access group.

In this implementation, when the subscription data stored in the UDM network element changes, the UDM network element may trigger a terminal configuration update (UE configuration update, UCU) procedure, to update latest subscription data to the second terminal. For example, the UDM network element may send the eighth information to the second terminal, to indicate information about the closed access group that the second terminal is allowed to access. The eighth information may include the indication information of the first closed access group, for example, an identifier (for example, an ID) of the first closed access group. It should be understood that the information about the closed access group that the second terminal is allowed to access may include information about the first closed access group, for example, the identifier of the first closed access group.

According to a tenth aspect, this application provides a communication apparatus. The apparatus includes modules configured to implement the method according to any one of the first aspect or the implementations of the first aspect, and each module may be implemented in a form of hardware and/or software.

For example, the apparatus may include a receiving module and a sending module. The receiving module is configured to receive first information from a first terminal, where the first information indicates a second terminal allowed to access a first home base station, and the first terminal is a management terminal of the first home base station. The sending module is configured to send second information, where the second information indicates to store indication information of a first closed access group in subscription data for the second terminal, and the first closed access group is a closed access group corresponding to the first home base station.

With reference to the tenth aspect, in some implementations of the tenth aspect, the first information includes the indication information of the first closed access group and indication information of the second terminal.

With reference to the tenth aspect, in some implementations of the tenth aspect, the indication information of the first closed access group includes an identifier of the first closed access group and/or an identifier of the first terminal, the identifier of the first terminal is used to determine the identifier of the first closed access group.

With reference to the tenth aspect, in some implementations of the tenth aspect, the indication information of the second terminal includes a GPSI and/or a GSM number of the second terminal.

With reference to the tenth aspect, in some implementations of the tenth aspect, the first information further includes a restriction condition for the second terminal to access the first home base station.

With reference to the tenth aspect, in some implementations of the tenth aspect, the restriction condition includes at least one of the following conditions: time of use, duration of use, location of use, or bandwidth for use.

According to an eleventh aspect, this application provides a communication apparatus. The apparatus includes modules configured to implement the method according to any one of the second aspect or the implementations of the second aspect, and each module may be implemented in a form of hardware and/or software.

For example, the apparatus may include a processing module and a sending module. The processing module is configured to determine first information, where the first information indicates a second terminal allowed to access a first home base station, and a first terminal is a management terminal of the first home base station. The sending module is configured to send the first information to a first function network element.

With reference to the eleventh aspect, in some implementations of the eleventh aspect, the first information includes indication information of a first closed access group and indication information of the second terminal, and the first closed access group is a closed access group corresponding to the first home base station.

With reference to the eleventh aspect, in some implementations of the eleventh aspect, the indication information of the first closed access group includes an identifier of the first closed access group and/or an identifier of the first terminal, the identifier of the first terminal is used to determine the identifier of the first closed access group.

With reference to the eleventh aspect, in some implementations of the eleventh aspect, the indication information of the second terminal includes a GPSI and/or a GSM number of the second terminal.

With reference to the eleventh aspect, in some implementations of the eleventh aspect, the first information further includes a restriction condition for the second terminal to access the first home base station.

With reference to the eleventh aspect, in some implementations of the eleventh aspect, the restriction condition includes at least one of the following conditions: time of use, duration of use, location of use, or bandwidth for use.

According to a twelfth aspect, this application provides a communication apparatus. The apparatus includes modules configured to implement the method according to any one of the third aspect or the implementations of the third aspect, and each module may be implemented in a form of hardware and/or software.

For example, the apparatus may include a receiving module and a sending module. The receiving module is configured to receive first information from a first terminal, where the first information indicates a restriction condition for a visitor terminal to access a first home base station, and the first terminal is a management terminal of the first home base station. The receiving module is further configured to receive third information from a second terminal, where the third information includes a verification condition for the second terminal to access the first home base station, indication information of a first closed access group, and indication information of the second terminal, and the first closed access group is a closed access group corresponding to the first home base station. The sending module is configured to send second information when the verification condition meets the restriction condition, where the second information indicates to store the indication information of the first closed access group in subscription data for the second terminal.

With reference to the twelfth aspect, in some implementations of the twelfth aspect, the first information includes the indication information of the first closed access group and indication information of the restriction condition.

With reference to the twelfth aspect, in some implementations of the twelfth aspect, the indication information of the first closed access group includes an identifier of the first closed access group and/or an identifier of the first terminal, the identifier of the first terminal is used to determine the identifier of the first closed access group.

With reference to the twelfth aspect, in some implementations of the twelfth aspect, the restriction condition includes at least one of the following conditions: time of use, duration of use, location of use, key for use, password for use, or bandwidth for use.

With reference to the twelfth aspect, in some implementations of the twelfth aspect, the sending module is further configured to: when the verification condition meets the restriction condition, send fourth information to the second terminal, where the fourth information indicates that the second terminal is allowed to access the first home base station.

According to a thirteenth aspect, this application provides a communication apparatus. The apparatus includes modules configured to implement the method according to any one of the fourth aspect or the implementations of the fourth aspect, and each module may be implemented in a form of hardware and/or software.

For example, the apparatus may include a processing module and a sending module. The processing module is configured to determine first information, where the first information indicates a restriction condition for a visitor terminal to access a first home base station, and a first terminal is a management terminal of the first home base station. The sending module is configured to send the first information to a first function network element.

With reference to the thirteenth aspect, in some implementations of the thirteenth aspect, the first information includes indication information of a first closed access group and indication information of the restriction condition, and the first closed access group is a closed access group corresponding to the first home base station.

With reference to the thirteenth aspect, in some implementations of the thirteenth aspect, the indication information of the first closed access group includes an identifier of the first closed access group and/or an identifier of the first terminal, the identifier of the first terminal is used to determine the identifier of the first closed access group.

With reference to the thirteenth aspect, in some implementations of the thirteenth aspect, the restriction condition includes at least one of the following conditions: time of use, duration of use, location of use, key for use, password for use, or bandwidth for use.

According to a fourteenth aspect, this application provides a communication apparatus. The apparatus includes modules configured to implement the method according to any one of the fifth aspect or the implementations of the fifth aspect, and each module may be implemented in a form of hardware and/or software.

For example, the apparatus may include a sending module and a receiving module. The sending module is configured to send third information to a first function network element, where the third information includes a verification condition for a second terminal to access a first home base station, indication information of a first closed access group, and indication information of the second terminal, and the first closed access group is a closed access group corresponding to the first home base station. The receiving module is configured to receive fourth information from the first function network element, where the fourth information indicates that the second terminal is allowed to access the first home base station.

With reference to the fourteenth aspect, in some implementations of the fourteenth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

With reference to the fourteenth aspect, in some implementations of the fourteenth aspect, the indication information of the second terminal includes a GPSI and/or a GSM number of the second terminal.

According to a fifteenth aspect, this application provides a communication apparatus. The apparatus includes modules configured to implement the method according to any one of the sixth aspect or the implementations of the sixth aspect, and each module may be implemented in a form of hardware and/or software.

For example, the apparatus may include a sending module and a receiving module. The sending module is configured to send fifth information to a second function network element, where the fifth information is used to request to determine whether a second terminal is allowed to access a first home base station, and the fifth information includes indication information of the second terminal. The receiving module is configured to receive sixth information from the second function network element, where the sixth information indicates whether the second terminal is allowed to access the first home base station.

With reference to the fifteenth aspect, in some implementations of the fifteenth aspect, the indication information of the second terminal includes a GPSI and/or a GSM number of the second terminal.

With reference to the fifteenth aspect, in some implementations of the fifteenth aspect, the fifth information further includes indication information of a first closed access group, and the first closed access group is a closed access group corresponding to the first home base station.

With reference to the fifteenth aspect, in some implementations of the fifteenth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

With reference to the fifteenth aspect, in some implementations of the fifteenth aspect, the sixth information includes indication information indicating whether the second terminal is allowed to access the first home base station and/or information about a closed access group that the second terminal is allowed to access.

With reference to the fifteenth aspect, in some implementations of the fifteenth aspect, the apparatus may further include a processing module. The processing module is configured to: when the sixth information includes the information about the closed access group that the second terminal is allowed to access, and the information about the closed access group that the second terminal is allowed to access includes closed access group information corresponding to the first home base station, allow the second terminal to access the first home base station.

With reference to the fifteenth aspect, in some implementations of the fifteenth aspect, the receiving module is further configured to receive seventh information, where the seventh information indicates that the second terminal is a visitor terminal. The processing module is further configured to determine the fifth information based on the seventh information.

According to a sixteenth aspect, this application provides a communication apparatus. The apparatus includes modules configured to implement the method according to any one of the seventh aspect or the implementations of the seventh aspect, and each module may be implemented in a form of hardware and/or software.

For example, the apparatus may include a receiving module and a sending module. The receiving module is configured to receive fifth information from a first AMF network element, where the fifth information is used to request to determine whether a second terminal is allowed to access a first home base station, and the fifth information includes indication information of the second terminal. The sending module is configured to send sixth information to the first AMF network element, where the sixth information indicates whether the second terminal is allowed to access the first home base station.

With reference to the sixteenth aspect, in some implementations of the sixteenth aspect, the fifth information further includes indication information of a first closed access group, and the first closed access group is a closed access group corresponding to the first home base station.

With reference to the sixteenth aspect, in some implementations of the sixteenth aspect, the sixth information includes indication information indicating whether the second terminal is allowed to access the first home base station and/or information about a closed access group that the second terminal is allowed to access.

With reference to the sixteenth aspect, in some implementations of the sixteenth aspect, the apparatus may further include a processing module. Before the sixth information is sent to the first AMF network element, the processing module is configured to determine, based on the fifth information and the information about the closed access group that the second terminal is allowed to access, whether the second terminal is allowed to access the first home base station.

With reference to the sixteenth aspect, in some implementations of the sixteenth aspect, the receiving module is further configured to receive first information from a first terminal, where the first information indicates a second terminal allowed to access the first home base station, and the first terminal is a management terminal of the first home base station. The processing module is further configured to determine, based on the first information, information about a closed access group that the second terminal is allowed to access.

With reference to the sixteenth aspect, in some implementations of the sixteenth aspect, the first information includes the indication information of the first closed access group and indication information of the second terminal.

With reference to the sixteenth aspect, in some implementations of the sixteenth aspect, the indication information of the second terminal includes a GPSI and/or a GSM number of the second terminal.

With reference to the sixteenth aspect, in some implementations of the sixteenth aspect, the indication information of the first closed access group includes an identifier of the first closed access group and/or an identifier of the first terminal, the identifier of the first terminal is used to determine the identifier of the first closed access group.

With reference to the sixteenth aspect, in some implementations of the sixteenth aspect, the first information further includes a restriction condition for the second terminal to access the first home base station.

With reference to the sixteenth aspect, in some implementations of the sixteenth aspect, the restriction condition includes at least one of the following conditions: time of use, duration of use, location of use, or bandwidth for use.

According to a seventeenth aspect, this application provides a communication apparatus. The apparatus includes modules configured to implement the method according to any one of the eighth aspect or the implementations of the first aspect, and each module may be implemented in a form of hardware and/or software.

For example, the apparatus may include a receiving module and a processing module. The receiving module is configured to receive seventh information from a second terminal, where the seventh information indicates that the second terminal is a visitor terminal. The processing module is configured to determine, based on the seventh information, whether the second terminal is allowed to access a first home base station.

With reference to the seventeenth aspect, in some implementations of the seventeenth aspect, the receiving module is further configured to receive first information from a first terminal, where the first information indicates a visitor terminal allowed to access the first home base station, and the first terminal is a management terminal of the first home base station. The processing module is further configured to determine, based on the first information, information about a closed access group that the visitor terminal is allowed to access.

With reference to the seventeenth aspect, in some implementations of the seventeenth aspect, the first information includes indication information of a first closed access group and indication information of the visitor terminal, and the first closed access group is a closed access group corresponding to the first home base station.

With reference to the seventeenth aspect, in some implementations of the seventeenth aspect, the indication information of the visitor terminal includes a GPSI and/or a GSM number of the visitor terminal.

With reference to the seventeenth aspect, in some implementations of the seventeenth aspect, the indication information of the first closed access group includes an identifier of the first closed access group and/or an identifier of the first terminal, the identifier of the first terminal is used to determine the identifier of the first closed access group.

With reference to the seventeenth aspect, in some implementations of the seventeenth aspect, the first information further includes a restriction condition for the visitor terminal to access the first home base station.

With reference to the seventeenth aspect, in some implementations of the seventeenth aspect, the restriction condition includes at least one of the following conditions: time of use, duration of use, location of use, or bandwidth for use.

According to an eighteenth aspect, this application provides a communication apparatus. The apparatus includes modules configured to implement the method according to any one of the ninth aspect or the implementations of the ninth aspect, and each module may be implemented in a form of hardware and/or software.

For example, the apparatus may include a receiving module and a processing module. The receiving module is configured to receive second information, where the second information indicates to store indication information of a first closed access group in subscription data for a second terminal, and the first closed access group is a closed access group corresponding to a first home base station. The processing module is configured to store the indication information of the first closed access group in the subscription data for the second terminal based on the second information.

With reference to the eighteenth aspect, in some implementations of the eighteenth aspect, the second information includes the indication information of the first closed access group and indication information of the second terminal.

With reference to the eighteenth aspect, in some implementations of the eighteenth aspect, the indication information of the second terminal includes a GPSI and/or a GSM number of the second terminal.

With reference to the eighteenth aspect, in some implementations of the eighteenth aspect, the indication information of the first closed access group includes an identifier of the first closed access group and/or an identifier of a first terminal, the identifier of the first terminal is used to determine the identifier of the first closed access group, and the first terminal is a management terminal of the first home base station.

With reference to the eighteenth aspect, in some implementations of the eighteenth aspect, the second information further includes a restriction condition for the second terminal to access the first home base station.

With reference to the eighteenth aspect, in some implementations of the eighteenth aspect, the restriction condition includes at least one of the following conditions: time of use, duration of use, location of use, or bandwidth for use.

With reference to the eighteenth aspect, in some implementations of the eighteenth aspect, the apparatus may further include a sending module. The sending module is configured to send eighth information, where the eighth information includes the indication information of the first closed access group.

According to a nineteenth aspect, this application provides a communication apparatus, including a processor. The processor may be coupled to a memory, and is configured to invoke program code in the memory, to perform the method according to any one of the first aspect or the possible implementations of the first aspect. Optionally, the apparatus further includes the memory. Optionally, the apparatus further includes a communication interface, and the processor is coupled to the communication interface.

For example, the apparatus may be a first function network element, or may be a chip system, a hardware circuit, and/or a software module used in the first function network element.

According to a twentieth aspect, this application provides a communication apparatus, including a processor. The processor may be coupled to a memory, and is configured to invoke program code in the memory, to perform the method according to any one of the second aspect or the possible implementations of the second aspect. Optionally, the apparatus further includes the memory. Optionally, the apparatus further includes a communication interface, and the processor is coupled to the communication interface.

For example, the apparatus may be a first terminal, or may be a chip system, a hardware circuit, and/or a software module used in the first terminal.

According to a twenty-first aspect, this application provides a communication apparatus, including a processor. The processor may be coupled to a memory, and is configured to invoke program code in the memory, to perform the method according to any one of the third aspect or the possible implementations of the third aspect. Optionally, the apparatus further includes the memory. Optionally, the apparatus further includes a communication interface, and the processor is coupled to the communication interface.

For example, the apparatus may be a first function network element, or may be a chip system, a hardware circuit, and/or a software module used in the first function network element.

According to a twenty-second aspect, this application provides a communication apparatus, including a processor. The processor may be coupled to a memory, and is configured to invoke program code in the memory, to perform the method according to any one of the fourth aspect or the possible implementations of the fourth aspect. Optionally, the apparatus further includes the memory. Optionally, the apparatus further includes a communication interface, and the processor is coupled to the communication interface.

For example, the apparatus may be a first terminal, or may be a chip system, a hardware circuit, and/or a software module used in the first terminal.

According to a twenty-third aspect, this application provides a communication apparatus, including a processor. The processor may be coupled to a memory, and is configured to invoke program code in the memory, to perform the method according to any one of the fifth aspect or the possible implementations of the fifth aspect. Optionally, the apparatus further includes the memory. Optionally, the apparatus further includes a communication interface, and the processor is coupled to the communication interface.

For example, the apparatus may be a second terminal, or may be a chip system, a hardware circuit, and/or a software module used in the second terminal.

According to a twenty-fourth aspect, this application provides a communication apparatus, including a processor. The processor may be coupled to a memory, and is configured to invoke program code in the memory, to perform the method according to any one of the sixth aspect or the possible implementations of the sixth aspect. Optionally, the apparatus further includes the memory. Optionally, the apparatus further includes a communication interface, and the processor is coupled to the communication interface.

For example, the apparatus may be an AMF network element, or may be a chip system, a hardware circuit, and/or a software module used in the AMF network element.

According to a twenty-fifth aspect, this application provides a communication apparatus, including a processor. The processor may be coupled to a memory, and is configured to invoke program code in the memory, to perform the method according to any one of the seventh aspect or the possible implementations of the seventh aspect. Optionally, the apparatus further includes the memory. Optionally, the apparatus further includes a communication interface, and the processor is coupled to the communication interface.

For example, the apparatus may be a second function network element, or may be a chip system, a hardware circuit, and/or a software module used in the second function network element.

According to a twenty-sixth aspect, this application provides a communication apparatus, including a processor. The processor may be coupled to a memory, and is configured to invoke program code in the memory, to perform the method according to any one of the eighth aspect or the possible implementations of the eighth aspect. Optionally, the apparatus further includes the memory. Optionally, the apparatus further includes a communication interface, and the processor is coupled to the communication interface.

For example, the apparatus may be a first AMF network element, or may be a chip system, a hardware circuit, and/or a software module used in the first AMF network element.

According to a twenty-seventh aspect, this application provides a communication apparatus, including a processor. The processor may be coupled to a memory, and is configured to invoke program code in the memory, to perform the method according to any one of the ninth aspect or the possible implementations of the ninth aspect. Optionally, the apparatus further includes the memory. Optionally, the apparatus further includes a communication interface, and the processor is coupled to the communication interface.

For example, the apparatus may be a UDM network element, or may be a chip system, a hardware circuit, and/or a software module used in the UDM network element.

According to a twenty-eighth aspect, this application provides a communication system. The system includes the apparatus in the tenth aspect or the nineteenth aspect, includes the apparatus in the eleventh aspect or the twentieth aspect, includes the apparatus in the twelfth aspect or the twenty-first aspect, includes the apparatus in the thirteenth aspect or the twenty-second aspect, includes the apparatus in the fourteenth aspect or the twenty-third aspect, includes the apparatus in the fifteenth aspect or the twenty-fourth aspect, includes the apparatus in the sixteenth aspect or the twenty-fifth aspect, includes the apparatus in the seventeenth aspect or the twenty-sixth aspect, and includes the apparatus in the eighteenth aspect or the twenty-seventh aspect.

According to a twenty-ninth aspect, this application provides a computer program product including instructions. When the computer program product runs on a computer, the computer is caused to perform the method according to any one of the first aspect to the ninth aspect or any possible implementation of any one of the first aspect to the ninth aspect.

According to a thirtieth aspect, this application provides a computer-readable medium. The computer-readable medium stores program code executed by a device, and the program code is used to perform the method according to any one of the first aspect to the ninth aspect or any possible implementation of any one of the first aspect to the ninth aspect.

For technical effects that can be achieved in any one of the tenth aspect to the thirtieth aspect and any possible design of any one of the tenth aspect to the thirtieth aspect, refer to the descriptions of the technical effects that can be achieved in the first aspect to the ninth aspect. Details are not described herein again.

### BRIEF DESCRIPTION OF DRAWINGS

FIG. 1 is a diagram of a network architecture of a communication system according to an embodiment of this application;
FIG. 2 is an illustrative diagram of another communication system;
FIG. 3 is an illustrative diagram of a communication method according to an embodiment of this application;
FIG. 4 is an illustrative diagram of a communication method according to another embodiment of this application;
FIG. 5 is an illustrative diagram of a communication method according to another embodiment of this application;
FIG. 6 is an illustrative diagram of a communication method according to another embodiment of this application;
FIG. 7 is an illustrative diagram of a communication method according to another embodiment of this application;
FIG. 8 is an illustrative diagram of a communication method according to another embodiment of this application;
FIG. 9 is an illustrative diagram of a communication method according to another embodiment of this application;
FIG. 10 is an illustrative diagram of a communication method according to another embodiment of this application;
FIG. 11 is an illustrative diagram of a communication method according to another embodiment of this application;
FIG. 12 is a diagram of a structure of a communication apparatus according to an embodiment of this application; and
FIG. 13 is a diagram of a structure of a communication apparatus according to another embodiment of this application.

### DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent same or similar elements. Implementations described in the following example embodiments do not represent all implementations consistent with this application. On the contrary, the implementations are merely examples of apparatuses and methods that are described in the appended claims in detail and that are consistent with some aspects of this application.

To clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" is used to represent giving an example, an illustration, or a description. Any embodiment or design solution described by using "as an example" or "for example" in this application should not be explained as being more preferred or having more advantages than another embodiment or design solution. To be precise, use of the words such as "example" or "for example" is intended to present a relative concept in a specific manner.

In embodiments of this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in this application may be applied to various communication systems, including but not limited to a narrowband internet of things system (narrowband internet of things, NB-IoT), a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a wireless fidelity (wireless fidelity, Wi-Fi) system, a 3rd generation (3rd generation, 3G) mobile communication system, a long term evolution (long term evolution, LTE) system, a long term evolution-advanced (LTE-advanced, LTE-A) system, an LTE frequency division duplex (frequency division duplex, FDD) system, an LTE time division duplex (time division duplex, TDD) system, a fourth generation (fourth generation, 4G) mobile communication system, a 5th generation (5th generation, 5G) mobile communication system, three application scenarios of a 5G new radio (new radio, NR) communication system: enhanced mobile broadband (enhanced mobile broadband, eMBB), ultra-reliable and low-latency communication (ultra-reliable and low-latency communication, URLLC), massive machine-type communications (massive machine-type communications, mMTC), and a future 6th generation (6th generation, 6G) mobile communication system, for example, a high frequency, a terahertz, or optical communication. This is not specifically limited in this application.

The technical solutions provided in this application may be applied to various communication systems, including but not limited to a narrowband internet of things (narrow band-internet of things, NB-IoT) system, a long term evolution (long term evolution, LTE) system, a long term evolution-advanced (LTE-advanced, LTE-A) system, an LTE frequency division duplex (frequency division duplex, FDD) system, an LTE time division duplex (time division duplex, TDD) system, a 5th generation (5th generation, 5G) mobile communication system, a new radio (new radio, NR) communication system, another evolved communication system, or the like. The 5G system usually includes the following three application scenarios: enhanced mobile broadband (enhanced mobile broadband, eMBB), ultra-reliable and low-latency communication (ultra-reliable and low-latency communication, URLLC), and massive machine-type communications (massive machine-type communications, mMTC).

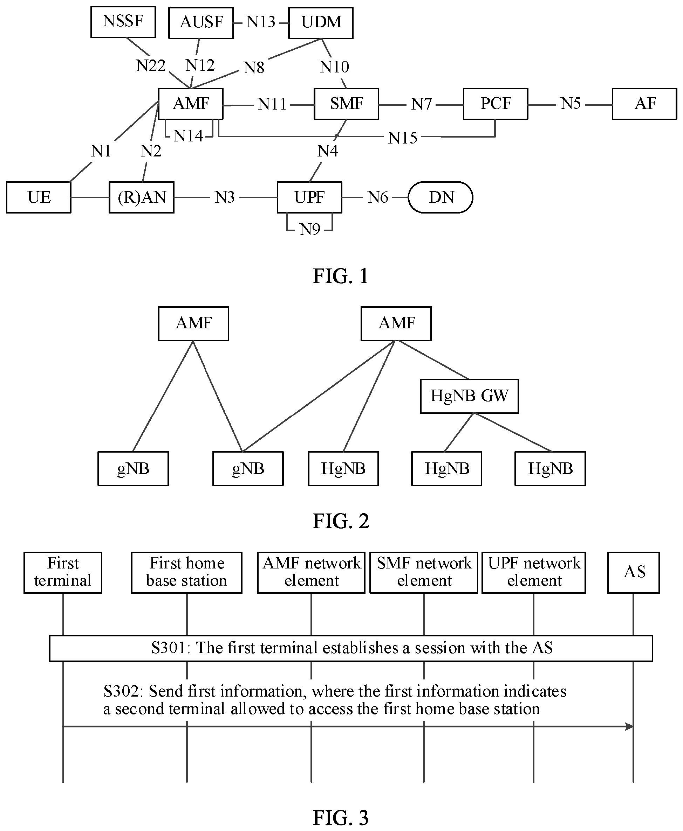

5G is used as an example. FIG. 1 is a diagram of a network architecture of a communication system according to an embodiment of this application. As shown in FIG. 1, the communication system includes a terminal device, an access network device, a core network device, and a data network.

The terminal device may also be referred to as user equipment (user equipment, UE), and is a device that provides voice/data connectivity for a user. Currently, some terminal devices may be, for example, a mobile phone (mobile phone), a tablet computer, a laptop computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, or a wearable device. This is not specifically limited in embodiments of this application.

The access network device may be a (radio) access network ((radio) access network, (R)AN), is configured to implement a function related to radio access, and is located between the UE and a core network (core network, CN). For example, the (R)AN may be a base station, a relay station, or an access point. The base station may be a base transceiver station (base transceiver station, BTS) in a global system for mobile communications (global system for mobile communications, GSM) or a code division multiple access (code division multiple access, CDMA) network, may be a node base station (node base station, NB) in wideband code division multiple access (wideband code division multiple access, WCDMA), may be an evolved (evolved) NB (eNB or eNodeB) in long term evolution (long term evolution, LTE), may be a radio controller in a cloud radio access network (cloud radio access network, CRAN) scenario, may be a base station device in a future 5G network or an access network device in a future evolved PLMN network, or may be a wearable device or a vehicle-mounted device.

The core network device includes at least one of the following function network elements: an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF) network element, an authentication server function (authentication server function, AUSF) network element, a unified data management (unified data management, UDM) network element, and a UPF network element.

For example, the AMF network element may also be referred to as an access and mobility management function, an access and mobility management device, an access and mobility management network element, an access management device, or a mobility management device, is mainly used for mobility management, access management, and the like, and may be configured to implement functions other than session management in functions of a mobility management entity (mobility management entity, MME), for example, functions such as lawful interception, access authorization (or authentication), user equipment registration, mobility management, a tracking area update procedure, reachability detection, selection of a session management network element, and mobility state transition management. For example, in 5G, the access and mobility management network element may be an AMF network element. In future communication, for example, in 6G, the access and mobility management network element may still be an AMF network element or have another name. This is not limited in this application. When the access and mobility management network element is the AMF network element, the AMF network element may provide a Namf service.

The SMF network element may also be referred to as an SMF entity, and is mainly configured to: manage a session-related service, for example, establish or release a session. In a future communication system, the session management function network element may still be the SMF network element, or may have another name. This is not limited in this application.

The UDM network element, also referred to as a UDM entity, is configured to handle terminal device identification, access authentication, registration, mobility management, and the like. In 5G, the data management network element may be a UDM network element or a unified data management device. In the future communication system, the unified data management may still be the UDM network element, or may have another name. This is not limited in this application.

The PCF network element is a policy decision point, and provides rules such as service data flow-based and application-based detection, gating control, quality of service (quality of service, QoS), and flow-based charging control.

The AF network element is mainly responsible for interacting with a 3rd generation partnership project (3rd generation partnership project, 3GPP) core network to provide services, to affect service flow routing, access network capability exposure, policy control, and the like.

The NSSF network element mainly determines, based on slice selection assistance information of the terminal, subscription information, and the like, network slice instances that the terminal is allowed to access. The AUSF network element is mainly configured to provide an authentication service.

The UPF network element is mainly responsible for routing and forwarding data packets, a mobility anchor, an uplink classifier to support service flows in being routed to a data network, a branch point to support multi-homing protocol data unit (protocol data unit, PDU) sessions, and the like.

A data network (data network, DN) is an operator network that provides data transmission services for users, for example, internet protocol multimedia services (internet protocol multimedia service, IMS) or internet (internet).

The UE may visit the DN by establishing a protocol data unit (protocol data unit, PDU) session among the UE, the (R)AN, the UPF network element, and the DN.

Refer to FIG. 1. UE may communicate with an AMF network element through an N1 interface, a (R)AN may communicate with the AMF network element through an N2 interface, the (R)AN may communicate with a UPF network element through an N3 interface, the UPF network element may communicate with an SMF network element through an N4 interface, a PCF network element may communicate with an AF network element through an N5 interface, the UPF network element may communicate with a DN through an N6 interface, the SMF network element may communicate with the PCF network element through an N7 interface, the AMF network element may communicate with a UDM network element through an N8 interface, the UPF network elements may communicate with each other through an N9 interface, the UDM network element may communicate with the SMF network element through an N10 interface, the AMF network element may communicate with the SMF network element through an N11 interface, the AMF network element may communicate with an AUSF network element through an N12 interface, the AUSF network element may communicate with the UDM network element through an N13 interface, the AMF network elements may communicate with each other through an N14 interface, the AMF network element may communicate with the PCF network element through an N15 interface, and the AMF network element may communicate with an NSSF network element through an N22 interface.

In some embodiments, the core network device may further include a network exposure function (network exposure function, NEF) network element, configured to provide external exposure of a network function capability.

It should be noted that, in embodiments of this application, an apparatus configured to implement a function of a communication device may be the communication device, or may be an apparatus like a chip system that can support the communication device in implementing the function of the communication device. The apparatus may be mounted in the communication device. In this embodiment of this application, the chip system may include a chip, or may include a chip and another discrete component. The communication device may be a terminal device, an access network device, or a core network device.

For example, FIG. 2 is an illustrative diagram of another communication system. The following describes, with reference to FIG. 2, the technical problem to be resolved in this application.

In existing base station deployment, there are some areas with poor coverage, for example, an indoor area. A user may deploy a home base station (home gNB, HgNB) to increase signal coverage in the indoor area. An architecture of an HgNB in a 5G communication system is the same as that of an existing common base station. In addition, to avoid an excessive quantity of HgNBs connected to an AMF network element, an HgNB gateway (gateway, GW) may be deployed in a network, so that the HgNB GW may be used as a convergence node to manage the HgNBs. As shown in FIG. 2, the HgNB GW may be between the HgNB and the AMF network element. From a perspective of the HgNB, the HgNB GW is equivalent to an AMF network element. From a perspective of the AMF network element, the HgNB GW is equivalent to an HgNB.

After the user deploys the HgNB at home, a closed access group mechanism may be introduced into the HgNB, and the HgNB is set to a closed (closed) mode, so that a visitor terminal (visitor UE) other than a management terminal (host UE) is constrained from accessing the network via the HgNB, the management terminal may be understood as a terminal of the user who purchases or owns the HgNB. A closed access group may support a network in performing access control on a terminal, or the network may perform access control on the terminal via the closed access group. For example, information about the closed access group for which access is allowed is stored in subscription data for the terminal, and the HgNB broadcasts identifier information of a corresponding closed access group. When the closed access group that the terminal is allowed to access corresponds to the closed access group broadcast by the HgNB, if the terminal accesses the network via the HgNB, the network may allow registration and access of the terminal; or when the closed access group that the terminal is allowed to access does not correspond to the closed access group broadcast by the HgNB, the network rejects a registration request from the terminal. That the closed access group that the terminal is allowed to access corresponds to the closed access group broadcast by the HgNB may be understood as that information about the closed access group that the terminal is allowed to access includes the identifier information of the closed access group broadcast by the HgNB.

In some embodiments, there may be a plurality of cells served by the HgNB. When the HgNB is in the closed (closed) mode, all cells served by the HgNB are cells that support a closed access group function. In embodiments of this application, a cell supporting a closed access group function and served by the HgNB may be referred to as a closed access group cell. That the HgNB broadcasts the identifier information of the closed access group may be understood as that a closed access group cell served by the HgNB broadcasts the identifier information of the closed access group.

For example, after the user purchases the HgNB, and the closed access group mechanism is introduced into the HgNB, an operator that sells the HgNB may configure information about a closed access group for the HgNB, for example, an identifier (identity, ID) of the closed access group, and information about a corresponding closed access group is updated in the subscription data for the management terminal, or information about a closed access group for which access is allowed, for example, an ID of the closed access group broadcast by the HgNB is stored in the subscription data for the management terminal. The HgNB broadcasts the ID of the closed access group of the HgNB. After the management terminal and the visitor terminal receive the broadcast of the HgNB, because the subscription data for the management terminal includes the ID of the closed access group broadcast by the HgNB, the management terminal may choose to access the network via the HgNB, and the network allows registration and access of the management terminal. Because subscription data for the visitor terminal does not include the ID of the closed access group broadcast by the HgNB, the visitor terminal cannot access the network via the HgNB.

However, when a HgNB is deployed and the HgNB is in a closed (closed) mode, there is a requirement for allowing a visitor terminal to access the network via the HgNB. Therefore, how to meet the requirement for the visitor terminal to access the network via the HgNB becomes a technical problem to be urgently resolved.

In view of this, this application provides a communication method and a communication apparatus. In the technical solutions provided in this application, in a scenario in which a visitor terminal is allowed to access an HgNB, the visitor terminal may obtain temporary closed access group information, so that the visitor terminal can access the HgNB to obtain a network service. The temporary closed access group information for the visitor terminal may also be referred to as information about a closed access group that the visitor terminal is allowed to access. When the visitor terminal may determine, based on the temporary closed access group information, a home base station that can access a network, and the temporary closed access group information for the visitor terminal includes an ID of a closed access group broadcast by the HgNB, the visitor terminal is allowed to access or visit the HgNB. It should be noted that, that the visitor terminal accesses the HgNB may also be referred to as that the visitor terminal visits the HgNB, or the visitor terminal accesses the network via the HgNB.

In the communication field, the closed access group may be referred to as a closed access group (closed access group, CAG) in a 5th generation (5th generation, 5G) mobile communication system, may be referred to as a closed subscriber group (closed subscriber group, CSG) in a fourth generation (fourth generation, 4G) mobile communication system, and may have another name in a future 6th generation (6th generation, 6G) mobile communication system. This is not limited herein. For ease of understanding and description, the 5G CAG is used as an example for description embodiments of this application.

Embodiments of this application provide two solutions for dynamically providing temporary CAG information for a visitor terminal. In a first solution, a management terminal actively triggers a procedure of dynamically providing temporary CAG information for a visitor terminal. For example, the management terminal may indicate, to a first function network element, a visitor terminal that is allowed to access a HgNB, so that the first function network element can trigger, based on indication information sent by the management terminal, a procedure of updating subscription data for the visitor terminal, to store the temporary CAG information in the subscription data for the visitor terminal; and trigger a terminal configuration update (UE configuration update, UCU) procedure after the update of the subscription data for the visitor terminal is completed, so that the visitor terminal can obtain the temporary CAG information. In a second solution, the visitor terminal actively requests to obtain temporary CAG information. For example, a management terminal may indicate, to a first function network element, a restriction condition for the visitor terminal to access a HgNB. If the visitor terminal needs to access the HgNB, the visitor terminal may send a verification condition to the first function network element. If the verification condition meets the restriction condition, the visitor terminal may obtain the temporary CAG information, to access the HgNB. The first function network element may be understood as an application server (application server, AS) or an AF network element of a third-party application that provides a service for the HgNB. For example, the first function network element may be provided by an operator corresponding to the HgNB or a supplier corresponding to the HgNB. This is not limited in this application.

Embodiment 1: A management terminal actively triggers a procedure of dynamically providing temporary CAG information for a visitor terminal. Embodiment 1 includes two parts of content. The first part is that the management terminal indicates, to a first function network element, a visitor terminal allowed to access an HgNB; and the second part is a procedure in which the first function network element triggers a UDM network element to update subscription data for the visitor terminal, so that the visitor terminal obtains the temporary CAG information.

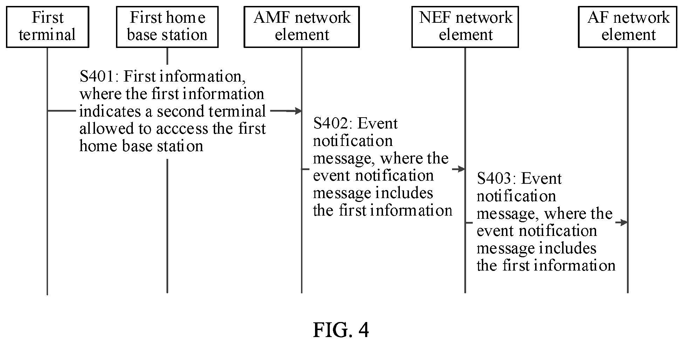

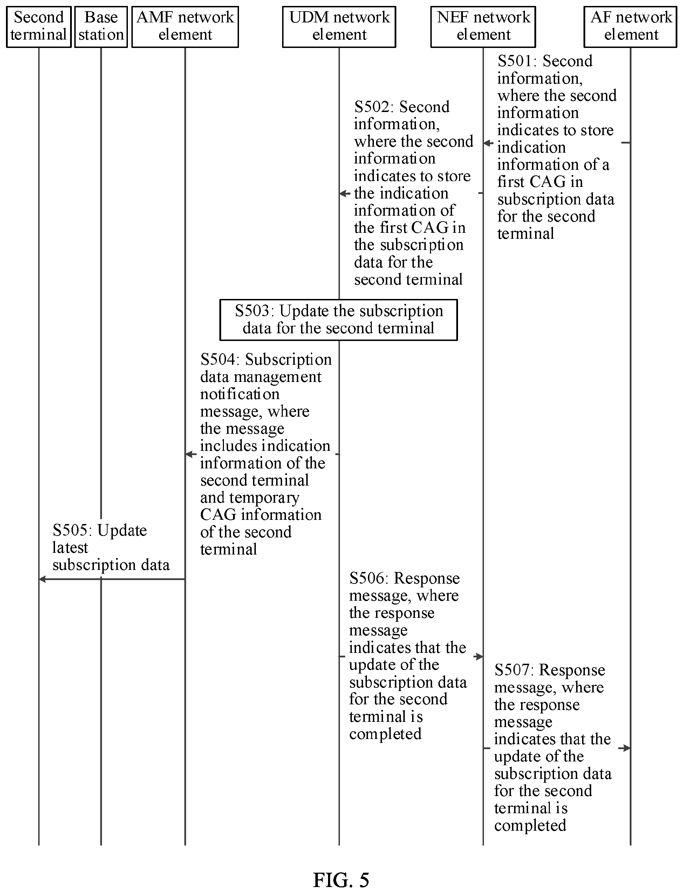

The following describes the technical solution in Embodiment 1 in detail with reference to FIG. 3 to FIG. 5. FIG. 3 and FIG. 4 show the first part of content in Embodiment 1. In FIG. 3, the management terminal indicates, to an AS through a user plane, the visitor terminal allowed to access the HgNB. In FIG. 4, the management terminal indicates, to an AF network element through a control plane, the visitor terminal allowed to access the HgNB. FIG. 5 shows the second part of content in Embodiment 1.

FIG. 3 is an illustrative diagram of a communication method according to an embodiment of this application. As shown in FIG. 3, the method may include S301 and S302.

S301: A first terminal establishes a session with an AS.

For example, the first terminal may be a management terminal of a first home base station.

In this embodiment, after obtaining information about the AS, the first terminal may establish a session with the AS. For example, the information about the AS may be preconfigured in the first terminal, or after a user purchases the first home base station, the user may obtain the information about the AS via website information or an application (application, APP) that is provided by an operator.

An implementation in which the first terminal establishes the session with the AS is not specifically limited in this embodiment. For example, the first terminal may be connected to the AS via a downloaded APP.

S302: The first terminal sends first information to the AS, where the first information indicates a second terminal allowed to access the first home base station.

In this embodiment, after the first terminal establishes the session with the AS, if there is a requirement for allowing a visitor terminal to access the first home base station, the first terminal may send the first information to the AS, to indicate the second terminal allowed to access the first home base station. The second terminal may also be referred to as a visitor terminal, in other words, the second terminal may be understood as the visitor terminal allowed to access the first home base station.

For example, the first information may include indication information of a first CAG and indication information of the second terminal. The indication information of the first CAG may indicate a CAG corresponding to the first home base station, for example, the first CAG. The indication information of the second terminal may indicate the second terminal. The CAG corresponding to the first home base station may be understood as a CAG broadcast by the first home base station or a CAG cell served by the first home base station.

For example, the first home base station may be explicitly indicated by using an identifier (identity, ID) of the first CAG, and the ID of the first CAG may be understood as a CAG ID configured by the operator for the first home base station.

For example, because the first terminal is the management terminal of the first home base station, CAG information stored in subscription data for the first terminal may include the ID of the first CAG. Therefore, the ID of the first CAG may be implicitly indicated by using an identifier of the first terminal. Correspondingly, the AS may determine, based on the identifier of the first terminal, a CAG that the first terminal is allowed to access, to determine the identifier of the first CAG.

For example, the indication information of the first CAG may include the identifier of the first CAG and/or the identifier of the first terminal.

If the first CAG is a CAG corresponding to the first home base station, the first home base station may broadcast identifier information of the first CAG, or the identifier information, broadcast by the first home base station, of the CAG may include the identifier of the first CAG.

For example, the second terminal may be indicated by using at least one of the following identifiers: a generic public subscription identifier (generic public subscription identifier, GPSI) of the second terminal, a global system for mobile communications (global system for mobile communications, GSM) number, a subscription concealed identifier (subscription concealed identifier, SUCI), a 5G globally unique temporary UE identity (globally unique temporary UE identity, 5G-GUT), or a permanent equipment identifier (permanent equipment identifier, PEI). The GSM number may be understood as a phone number of the second terminal. Therefore, the indication information of the second terminal may include at least one identifier of the second terminal.

In some embodiments, the first information may further include a restriction condition for the second terminal to access the first home base station, where the restriction condition includes at least one of the following conditions: time of use, duration of use, location of use, or bandwidth for use. The time of use may indicate a start moment and/or an end moment at which the second terminal is allowed to access the first home base station. For example, when the start moment is 9 a.m., it may be considered that the second terminal can access the first home base station only after 9 a.m.. The duration of use may indicate duration for which the second terminal is allowed to access the first home base station. For example, the duration of use may be 120 minutes. The location of use may indicate a location at which the second terminal is allowed to access the first home base station. For example, when the second terminal is within a preset area, the second terminal is allowed to access the first home base station. The bandwidth for use may indicate a network bandwidth that can be used by the second terminal after the second terminal accesses the first home base station. For example, the bandwidth for use may be 20 megahertz (MHz). In this embodiment of this application, that the second terminal accesses the first home base station may also be referred to as that the second terminal access the first home base station.

Correspondingly, the AS may receive the first information, and transmit the first information to an AF network element, so that the AF network element can learn of information about the first home base station and information about the second terminal allowed to access the first home base station. A manner of the transmission between the AS and the AF network element is not limited in this application.

In this embodiment, the management terminal may transmit, to the AF network element through a user plane, information about the first home base station and the information about the second terminal allowed to access the first home base station.

FIG. 4 is an illustrative diagram of a communication method according to another embodiment of this application. As shown in FIG. 4, the method may include S401, S402, and S403.

S401: A first terminal sends first information to an AMF network element, where the first information indicates a second terminal allowed to access a first home base station.

For example, the first terminal may be a management terminal of the first home base station.

In this embodiment, if there is a requirement for allowing a visitor terminal to access the first home base station, the first terminal may send a non-access stratum (non-access stratum, NAS) message to an AMF network element. The NAS message may include the first information, and the first information indicates the second terminal allowed to access the first home base station. For the first information, refer to the related descriptions of the first information in S302. Details are not described herein again. Correspondingly, the AMF network element may receive the first information.

In some embodiments, the first terminal may send the first information to the AMF network element via an access network device. The access network device may be the first home base station, and the access network device is configured to forward the first information.

S402: The AMF network element sends an event notification message to an NEF network element, where the event notification message includes the first information.

For example, before the method provided in this embodiment is performed, or before S401 or S402 is performed, the NEF network element may send a first event subscription request to the AMF network element, for example, the NEF network element may send an event subscription (Namf_EventExposure_Subscribe) message to the AMF network element, to subscribe to an event from the AMF. The event is that, for example, any terminal updates information about a visitor terminal to a network. The any terminal may include the first terminal. It should be understood that, that the first terminal updates the information about the visitor terminal to the network is merely an example rather than a limitation, alternatively, another terminal may update the information about the visitor terminal to the network.

Therefore, after the AMF network element receives the first information, because the NEF network element has subscribed to the event, the AMF network element may send an event notification (Namf_EventExposure_Notify) message to the NEF network element, where the message may include the first information. Correspondingly, the NEF network element may receive the first information.

S403: The NEF network element sends an event notification message to an AF network element, where the event notification message includes the first information.

For example, before the method provided in this embodiment is performed, or before S401, S402, or S403 is performed, the AF network element may send a second event subscription request to the NEF network element, for example, the AF network element may send an event subscription (Nnef_EventExposure_Subscribe) message to the NEF network element, to subscribe to an event from the NEF. The event is that, for example, any terminal updates information about a visitor terminal to a network. The any terminal may include the first terminal. It should be understood that, that the first terminal updates the information about the visitor terminal to the network is merely an example rather than a limitation, alternatively, another terminal may update the information about the visitor terminal to the network.

For example, after receiving the second event subscription request sent by the AF network element, the NEF network element may send the first event subscription request to the AMF network element. Therefore, the subscription event in the first event subscription request may be related to the subscription event in the second event subscription request.

Therefore, after the NEF network element receives the first information, because the AF network element has subscribed to the event, the NEF network element may send an event notification (Nnef_EventExposure_Notify) message to the AF network element, where the message may include the first information.

In this embodiment, the management terminal may transmit, to the AF network element through a control plane, information about the first home base station and the information about the second terminal allowed to access the first home base station.

FIG. 5 is an illustrative diagram of a communication method according to another embodiment of this application. As shown in FIG. 5, the method may include S501 to S507.

S501: An AF network element sends second information to an NEF network element, where the second information indicates to store indication information of a first CAG in subscription data for a second terminal.

In this embodiment, after receiving first information, the AF network element may trigger an external parameter providing/granting/provisioning procedure, for example, the AF network element may send, to the NEF network element, a request message, for example, an external parameter create request (Nnef_ParameterProvision_Create request) message, where the request message may include the second information, the second information may indicate to store the indication information of the first CAG in the subscription data for the second terminal, and the indication information of the first CAG is, for example, an identifier of the first CAG.

For example, the second information may include the indication information of the first CAG and indication information of the second terminal. The indication information of the first CAG may indicate a CAG corresponding to a first home base station, for example, the first CAG. The indication information of the second terminal may indicate the second terminal.

For example, the second information may further include condition information for the second terminal to access the first home base station, for example, one or more of time of use, duration of use, location of use, or bandwidth for use.

In this embodiment, for related descriptions of the indication information of the first CAG, the indication information of the second terminal, and a restriction condition, refer to the related descriptions in S302. Details are not described herein again.

It should be noted that there may be a plurality of second terminals indicated by the first information, and the second terminals may belong to different operator networks. Therefore, after receiving the first information, the AF network element may determine a home operator network of each second terminal indicated by the first information, send a request message to an NEF network element in the determined home operator network, where the request message may include the second information. It should be understood that the second terminal indicated by the second information may be a part or all of the second terminals indicated by the first information, and the AF network element may perform S501 for a plurality of times.

For example, for each second terminal, the AF network element may send the second information to an NEF network element in a home operator network of each second terminal, where the second information may indicate only one second terminal; or for each home operator network, the AF network element may send the second information to an NEF network element in each home operator network, where the second information may indicate one or more second terminals belonging to each operator network.

S502: The NEF network element sends the second information to a UDM network element, where the second information indicates to store the indication information of the first CAG in the subscription data for the second terminal.

In this embodiment, after receiving the second information, the NEF network element may send, to the UDM network element, a request message, for example, an external parameter create request (Nudm_ParameterProvision_Create request) message, where the request message may include the second information, and the second information indicates to store the indication information of the first CAG in the subscription data for the second terminal. Correspondingly, the UDM network element may receive the second information.

S503: The UDM network element updates the subscription data for the second terminal.

In this embodiment, after receiving the second information, the UDM network element determines, based on the indication information of the second terminal in the second information, a second terminal whose subscription data needs to be updated, and updates the subscription data for the second terminal. For example, the UDM network element may store temporary CAG information in the subscription data for the second terminal, to complete the update of the subscription data for the second terminal. The temporary CAG information for the second terminal may also be referred to as information about the CAG that the second terminal is allowed to access. The UDM network element may determine the temporary CAG information for the second terminal based on the second information. For example, the temporary CAG information may include the identifier of the first CAG and/or a restriction condition for the second terminal to access the first home base station. The identifier of the first CAG may indicate the CAG that the second terminal is allowed to access, and the restriction condition for the second terminal to access the first home base station may include one or more of the time of use, the duration of use, the location of use, and the bandwidth for use.

S504: The UDM network element sends a subscription data management notification message to an AMF network element, where the message includes the indication information of the second terminal and the temporary CAG information for the second terminal.

In this embodiment, when the subscription data stored in the UDM network element changes, the UDM network element may trigger a UCU procedure to update latest subscription data to the second terminal. For example, the UDM network element may update latest subscription data to the second terminal via the AMF network element, where the latest subscription data may include the temporary CAG information of the second terminal. For example, the UDM network element may send a subscription data management notification (Nudm_SDM_Notification Notify) message to the AMF network element, where the notification message may include the indication information of the second terminal and the temporary CAG information of the second terminal. Correspondingly, the AMF network element may receive the subscription data management notification message.

S505: The AMF network element updates the latest subscription data to the second terminal.

In this embodiment, after receiving the subscription data management notification message, the AMF network element may trigger the UCU procedure to update the latest subscription data to the second terminal, where the latest subscription data may include the temporary CAG information of the second terminal. For example, the AMF network element may determine the second terminal based on the indication information of the second terminal in the subscription data management notification message, and send the temporary CAG information to the second terminal.

Correspondingly, the second terminal may receive the temporary CAG information, and perform a registration procedure, to access a network via the first home base station to obtain a service.

S506: The UDM network element sends a response message to the NEF network element, where the response message indicates that the update of the subscription data for the second terminal is completed.

In this embodiment, after the update of the subscription data for the second terminal is completed, the UDM network element may send the response message (for example, Nudm_ParameterProvision_Create response) to the NEF network element, to indicate, to the NEF network element, that the update of the subscription data for the second terminal is completed. Correspondingly, the NEF network element may receive the response message.

S507: The NEF network element sends a response message to the AF network element, where the response message indicates that the update of the subscription data for the second terminal is completed.

In this embodiment, after receiving the response message from the UDM network element, the NEF network element may send the response message (for example, Nnef_ParameterProvision_Create response) to the AF network element, to indicate, to the AF network element, that the update of the subscription data for the second terminal is completed. Correspondingly, the AF network element may receive the response message.

In this embodiment of this application, an execution sequence of S504 and S506 is not limited. S504 may be performed before S506, or S506 may be performed before S504, or S504 and S506 may be simultaneously performed.

In this embodiment, after receiving the first information, the AF network element may trigger the external parameter granting procedure, and send the second information to the UDM network element in the home operator network of the second terminal, to indicate the UDM network element to determine the temporary CAG information of the second terminal, and store the CAG information in the subscription data for the second terminal. Because the subscription data for the second terminal is updated, the UDM network element may trigger the UCU procedure, so that the UDM network element can indicate the temporary CAG information of the second terminal to the second terminal, and the second terminal can access the core network based on the obtained temporary CAG information via the first home base station, to obtain the service.

In this embodiment, a procedure in which a management terminal actively reports, to a network, information about a visitor terminal allowed to access a first home base station is defined, so that a first function network element can update the information about the visitor terminal to a UDM network element, the UDM network element updates subscription data for the visitor terminal, and the visitor terminal may obtain temporary CAG information. In this way, the visitor terminal may join the network via the first home base station, to obtain a network service.

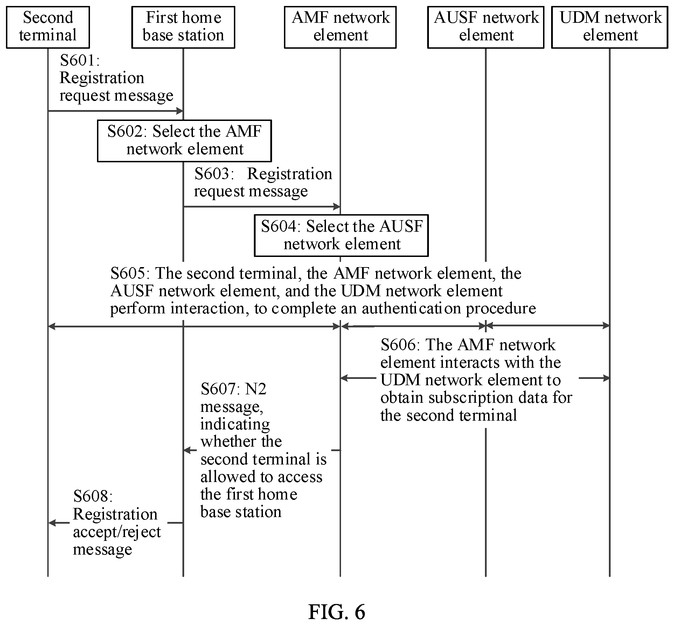

With reference to FIG. 6, the following describes in detail a method in which a second terminal registers with and accesses a core network via a first home base station.

FIG. 6 is an illustrative diagram of a communication method according to another embodiment of this application. As shown in FIG. 6, the method may include S601 to S608.

S601: A second terminal sends a registration request message to a first home base station.

In this embodiment, when the second terminal obtains temporary CAG information, and the temporary CAG information is stored in subscription data for the second terminal, the second terminal may send the registration request (registration request) message to the first home base station, to request to access the first home base station to obtain a network service.

For example, the registration request message may include a registration type (registration type) and indication information of the second terminal.

S602: The first home base station selects an AMF network element.

S603: The first home base station sends the registration request message from the second terminal to the AMF network element.

In this embodiment, after selecting the AMF network element, the first home base station may send the received registration request message from the second terminal to the AMF network element.

For example, the first home base station may further send, to the AMF network element, a CAG ID broadcast by the first home base station.

S604: The AMF network element selects an AUSF network element.

S605: The second terminal, the AMF network element, the AUSF network element, and a UDM network element perform interaction, to complete an authentication procedure.

S606: The AMF network element interacts with the UDM network element to obtain the subscription data for the second terminal.

In this embodiment, after mutual authentication between the second terminal and core network elements such as the AMF network element, the AUSF network element, and the UDM network element succeeds, the AMF network element may communicate with the UDM network element, so that the AMF network element can obtain the subscription data for the second terminal.

S607: The AMF network element sends an N2 message to the first home base station, to indicate whether the second terminal is allowed to access the first home base station.

In this embodiment, after obtaining the subscription data for the second terminal, the AMF network element may match the CAG information in the subscription data with the CAG ID broadcast by the first home base station. If the CAG information in the subscription data includes the CAG ID broadcast by the first home base station, it is considered that the second terminal is allowed to access the first home base station; or if the CAG information in the subscription data does not include the CAG ID broadcast by the first home base station, it is considered that the second terminal is not allowed to access the first home base station.

For example, if the second terminal is allowed to access the first home base station, the AMF network element may send the N2 message to the first home base station, where the N2 message may include a registration accept message (NAS message) that needs to be forwarded by the first home base station, and the registration accept message may be a Registration Accept message.

For example, if the second terminal is not allowed to access the first home base station, the AMF network element may send the N2 message to the first home base station, where the N2 message may include a registration reject message (NAS message) that needs to be forwarded by the first home base station.

S608. The first home base station sends a registration accept/reject message to the second terminal.

In this embodiment, after receiving the registration accept message, the first home base station may forward the registration accept message to the second terminal, so that the second terminal may access the first home base station to obtain the network service.

In this embodiment, after obtaining the temporary CAG information, the second terminal may request, through a registration procedure, to access the network via the first home base station, to obtain the network service.

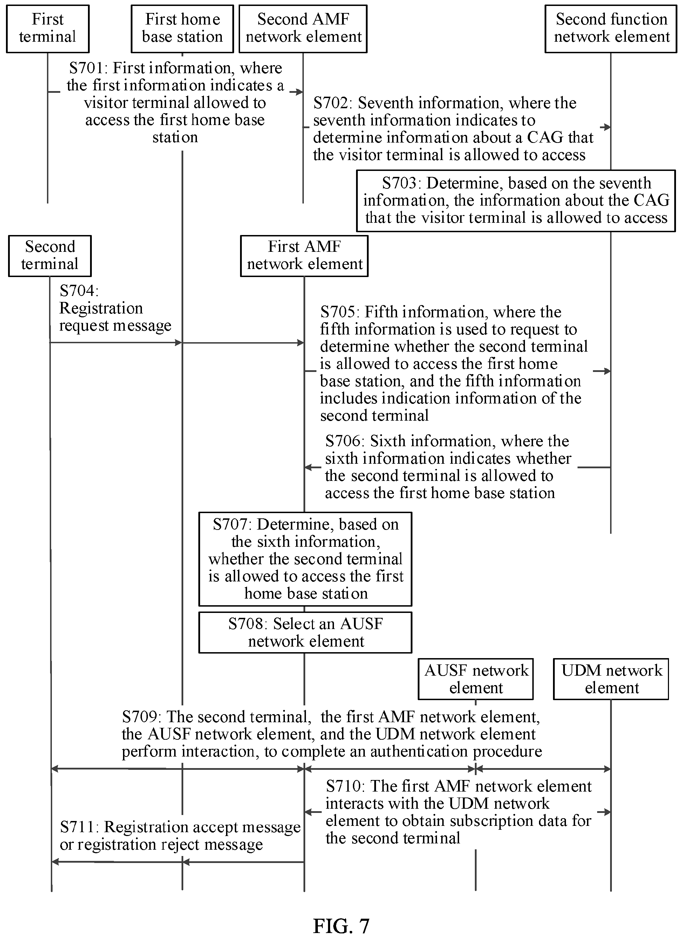

Embodiment 2: In some implementations, a function network element may be newly added to a core network, and the function network element may be configured to store temporary CAG information of a visitor terminal. In this way, when the visitor terminal requests to access a first home base station, whether the visitor terminal is allowed to access the first home base station may be determined based on the temporary CAG information of the visitor terminal stored in the second function network element. The following describes the solution in detail with reference to FIG. 7.

FIG. 7 is an illustrative diagram of a communication method according to another embodiment of this application. As shown in FIG. 7, the method may include S701 to S711.

S701: A second AMF network element receives first information from a first terminal, where the first information indicates a visitor terminal allowed to access a first home base station.

For example, the first terminal may be a management terminal of the first home base station.

In this embodiment, for specific implementations of S701, refer to S401. Details are not described herein again.

S702: The second AMF network element sends seventh information to a second function network element, where the seventh information indicates to determine information about a CAG that the visitor terminal is allowed to access.

For example, the second function network element may be understood as a function network element newly added to a core network and configured to store information about the visitor terminal. The second function network element may also be referred to as a second function entity, a CAG management network element (CAG management function), or another name. This is not limited in this application.

In this embodiment, after receiving the first information, the second AMF network element may send the seventh information to the second function network element, to indicate the second function network element to determine the information about the CAG that the visitor terminal is allowed to access or temporary CAG information. Correspondingly, the second function network element may receive the seventh information.

For example, the seventh information may include the first information. For example, the seventh information may include indication information of a first CAG and indication information of the visitor terminal; or the seventh information may include a restriction condition for the visitor terminal to access the first home base station.

S703: The second function network element determines, based on the seventh information, the information about the CAG that the visitor terminal is allowed to access.

In this embodiment, after receiving the seventh information, the second function network element may determine, based on the seventh information, the information about the CAG that the visitor terminal is allowed to access, and store the determined information about the CAG that the visitor terminal is allowed to access, for subsequent invocation.

For example, the information about the CAG that the visitor terminal is allowed to access may include CAG information corresponding to the first home base station, for example, an identifier of the first CAG.

S704: A first AMF network element receives a registration request message from the second terminal.

For example, the second terminal may be a visitor terminal that requests to visit the first home base station, or the second terminal may be a visitor terminal that requests to access the first home base station, or the second terminal may be a visitor terminal that requests to access a network via the first home base station.

In this embodiment, after a user deploys the first home base station, if the second terminal is allowed to access the first home base station, the second terminal may obtain, from the first terminal, an ID of the first CAG or a CAG ID broadcast by the first home base station, where the first CAG is a CAG corresponding to the first home base station. In this way, the second terminal may (manually) select, based on the obtained CAG ID, the first home base station or a CAG cell served by the first home base station, and send the registration request message to the first AMF network element, to request to access the network via the selected first home base station or the selected CAG cell served by the first home base station. Correspondingly, the first AMF network element may receive the registration request message.

For example, the registration request message may include eighth information, and the eighth information may indicate that the second terminal is a visitor terminal.

For example, the eighth information may be a specific field. The field may be a terminal type identifier or a registration type identifier, and the field may be a field with a length of N bits, where N is a positive integer. For example, when the field is a terminal type identifier and a bit length of the field is 1, if a value of the field is "0", it indicates that a terminal type of the second terminal is a visitor terminal; or if a value of the field is "1", it indicates that a terminal type of the second terminal is a visitor terminal. This is not specifically limited in this application. For another example, when the field is a registration type identifier and a bit length of the field is 1, if a value of the field is "0", it indicates that a registration type is temporary CAG registration; or if a value of the field is "1", it indicates that a registration type is temporary CAG registration. This is not specifically limited in this application. The temporary CAG registration may be understood as a registration manner in which the second terminal accesses the first home base station via the temporary CAG information. The temporary CAG registration may also have another name, and this is not specifically limited herein.

S705: The first AMF network element sends fifth information to the second function network element, where the fifth information is used to request to determine whether the second terminal is allowed to access the first home base station, and the fifth information includes indication information of the second terminal.

In this embodiment, after the first AMF network element receives the eighth information and determines that the second terminal is the visitor terminal, the first AMF network element may send the fifth information to the second function network element, to request to determine whether the second terminal is allowed to access the first home base station. Correspondingly, the second function network element may receive the fifth information.

For example, the fifth information may include the indication information of the second terminal. For the indication information of the second terminal, refer to the related descriptions in the foregoing embodiment. Details are not described herein again.

In some embodiments, the fifth information may further include the indication information of the first CAG, and the first CAG is the CAG corresponding to the first home base station. For the indication information of the first CAG, refer to the related descriptions in the foregoing embodiment. Details are not described herein again.

In some embodiments, if the registration request message sent by the second terminal does not include the eighth information, the first AMF network element may obtain subscription data for the second terminal from a UDM network element. If the information about the CAG for which the access is allowed is not stored in the subscription data for the second terminal, or the information, stored in the subscription data for the second terminal, about the CAG for which the access is allowed does not include the CAG ID broadcast by the first home base station, it is considered that the second terminal is the visitor terminal of the first home base station. For a method for obtaining, by the first AMF network element, the subscription data for the second terminal from the UDM network element, refer to the descriptions of S604 to S606. Details are not described herein again.

S706: The second function network element sends sixth information to the first AMF network element, where the sixth information indicates whether the second terminal is allowed to access the first home base station.

In this embodiment, after receiving the fifth information, the second function network element may determine, based on the fifth information, whether the second terminal is allowed to access the first home base station, and indicate a determining result to the first AMF network element via the sixth information. Correspondingly, the first AMF network element may receive the sixth information.

For example, after receiving the fifth information, the second function network element may determine, based on the indication information of the second terminal in the fifth information, that the visitor terminal is the second terminal, and invoke the information, determined and stored by the second function network element in S703, about the CAG that the visitor terminal is allowed to access. If the second function network element does not store the information about the CAG that the second terminal is allowed to access, it is considered that the second terminal is not allowed to access the first home base station; or if the second function network element stores the information about the CAG that the second terminal is allowed to access, and the information about the CAG that the second terminal is allowed to access includes the indication information of the first CAG (for example, the identifier of the first CAG), it is considered that the second terminal is allowed to access the first home base station; or if the second function network element stores the information about the CAG that the second terminal is allowed to access, but the information about the CAG that the second terminal is allowed to access does not include the indication information of the first CAG, it is considered that the second terminal is not allowed to access the first home base station.

For example, the sixth information may explicitly indicate whether the second terminal is allowed to access the first home base station. For example, the sixth information may include indication information indicating that the second terminal is allowed to access the first home base station, or may include indication information indicating that the second terminal is not allowed to access the first home base station. For example, the sixth information may be a field with a length of 1 bit. For example, when the sixth information is "1", it indicates that the second terminal is allowed to access the first home base station; or when the sixth information is "0", it indicates that the second terminal is not allowed to access the first home base station. Alternatively, when the sixth information is "0", it indicates that the second terminal is allowed to access the first home base station; or when the sixth information is "1", it indicates that the second terminal is not allowed to access the first home base station. This is not limited herein.

For example, the sixth information may implicitly indicate whether the second terminal is allowed to access the first home base station. For example, the sixth information may include the information about the CAG that the second terminal is allowed to access, so that the first AMF network element can autonomously determine, based on the sixth information, whether the second terminal is allowed to access the first home base station.

S707: The first AMF network element determines, based on the sixth information, whether the second terminal is allowed to access the first home base station.

In this embodiment, when the sixth information includes the indication information indicating whether the second terminal is allowed to access the first home base station, the first AMF may directly determine, via the sixth information, whether the second terminal is allowed to access the first home base station. If the sixth information includes the information about the CAG that the second terminal is allowed to access, the first AMF network element needs to autonomously determine whether the information about the CAG that the second terminal is allowed to access includes the indication information of the first CAG (for example, the identifier of the first CAG). If the information about the CAG that the second terminal is allowed to access includes the indication information of the first CAG, it is considered that the second terminal is allowed to access the first home base station; or if the information about the CAG that the second terminal is allowed to access does not include the indication information of the first CAG, it is considered that the second terminal is not allowed to access the first home base station. The first AMF network element may directly obtain the indication information of the first CAG from the first home base station, where the indication information of the first CAG may indicate the CAG corresponding to the first home base station.

In this embodiment, if the first AMF network element determines that the second terminal is allowed to access the first home base station, S708 to S711 may be performed; or if the first AMF network element determines that the second terminal is not allowed to access the first home base station, S711 may be directly performed, and S708 to S710 are not performed.

S708: The first AMF network element selects an AUSF network element.

S709: The second terminal, the first AMF network element, the AUSF network element, and the UDM network element perform interaction, to complete an authentication procedure.

S710: The first AMF network element interacts with the UDM network element to obtain the subscription data for the second terminal.

In this embodiment, the subscription data of the second terminal obtained by the first AMF network element from the UDM network element may include information like a traffic package to which the second terminal subscribes and a service purchased by the second terminal. It should be understood that, in this embodiment, the subscription data for the second terminal does not include the information about the CAG that the second terminal is allowed to access.

In this embodiment, for specific implementations of S708 to S710, respectively refer to S604 to S606. Details are not described herein again.

S711: The first AMF network element sends a registration accept message or a registration reject message to the second terminal.

In this embodiment, if the first AMF network element determines that the second terminal is not allowed to access the first home base station, the first AMF network element may send the registration reject message to the second terminal via a NAS message, or the first AMF network element may send the registration reject message to the second terminal via the first home base station. If the first AMF network element determines that the second terminal is allowed to access the first home base station, the first AMF network element may send the registration accept message to the second terminal via a NAS message, or the first AMF network element may send the registration accept message to the second terminal via the first home base station, so that the second terminal can access the first home base station, to obtain a network service.

In this embodiment, the newly added second function network element is defined in the core network, so that the management terminal can dynamically update the information about the visitor terminal to the second function network element, and the second function network element may be used as storage space of the temporary CAG information of the visitor terminal. In this way, when the second terminal performs registration and access, whether the second terminal is allowed to access the first home base station may be determined based on the stored temporary CAG information of the visitor terminal, so that the subscription data for the second terminal does not need to be updated, thereby reducing power consumption. In this embodiment, the first AMF network element may determine, based on the indication information carried in the registration request message from the second terminal, whether the second terminal is the visitor terminal, and send the fifth information to the second function network element when determining that the second terminal is the visitor terminal, to determine whether the second terminal is allowed to access the first home base station.

In a possible implementation, the second function network element may be independently deployed in the core network, or may be co-deployed with the AMF network element; or the second function network element may be deployed in the AMF network element as a part of functions of the AMF network element. It should be understood that, if the second function network element is co-deployed with the AMF network element, the second AMF network element and the first AMF network element may be a same device, and are collectively referred to as an AMF network element for ease of description.

For example, if the AMF network element can implement a function of the second function network element, after performing S701 of receiving the first information from the first terminal, the AMF network element may perform S702a of determining, based on the first information, the information about the CAG that the visitor terminal is allowed to access. It should be understood that, in this example, S702 and S703 may be replaced with S702a. For a specific implementation process in which the AMF network element performs S702a, refer to the related descriptions in S702 and S703. Details are not described herein again.

For example, if the AMF network element can implement the function of the second function network element, after performing S704 of receiving the registration request message from the second terminal, the AMF network element may perform S705a of determining, based on the registration request message, whether the second terminal is allowed to access the first home base station. It should be understood that, in this example, S705 to S707 may be replaced with S705a. For a specific implementation process in which the AMF network element performs S705a, refer to the related content in S705 to S707. Details are not described herein again. It should be understood that after performing S701, S702a, S704, and S705a, the AMF network element may continue to perform at least one of S708 to S711. Details are not described herein again.

Embodiment 3: A visitor terminal actively requests to obtain temporary CAG information. For example, a management terminal may indicate, to a first function network element, a restriction condition for the visitor terminal to access a HgNB. If the visitor terminal needs to access the HgNB, the visitor terminal may send a verification condition to the first function network element. If the verification condition meets the restriction condition, the visitor terminal may obtain the temporary CAG information, to access the HgNB to obtain a service. In comparison with the solution in Embodiment 1, the management terminal in Embodiment 3 does not need to indicate, to the first function network element each time there is a requirement for allowing the visitor terminal to access the HgNB, the visitor terminal allowed to access the HgNB, so that power consumption is reduced. Embodiment 3 includes two parts of content. The first part is that the management terminal indicates, to the first function network element, the restriction condition for the visitor terminal to access a first home base station; and the second part is that the visitor terminal actively obtains the CAG information.

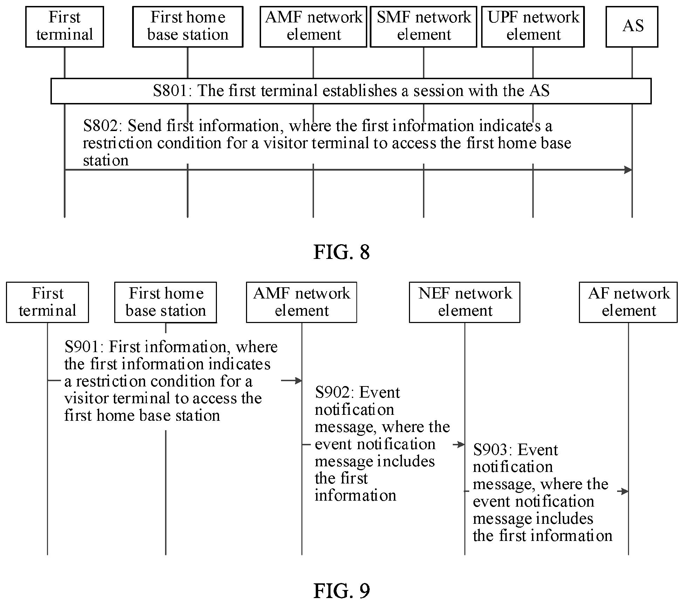

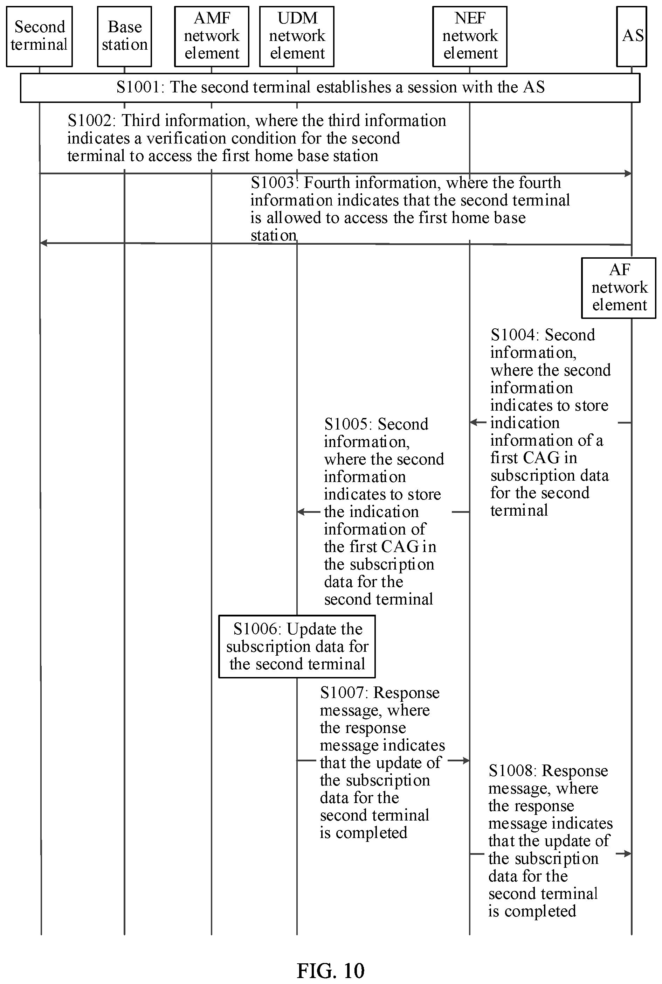

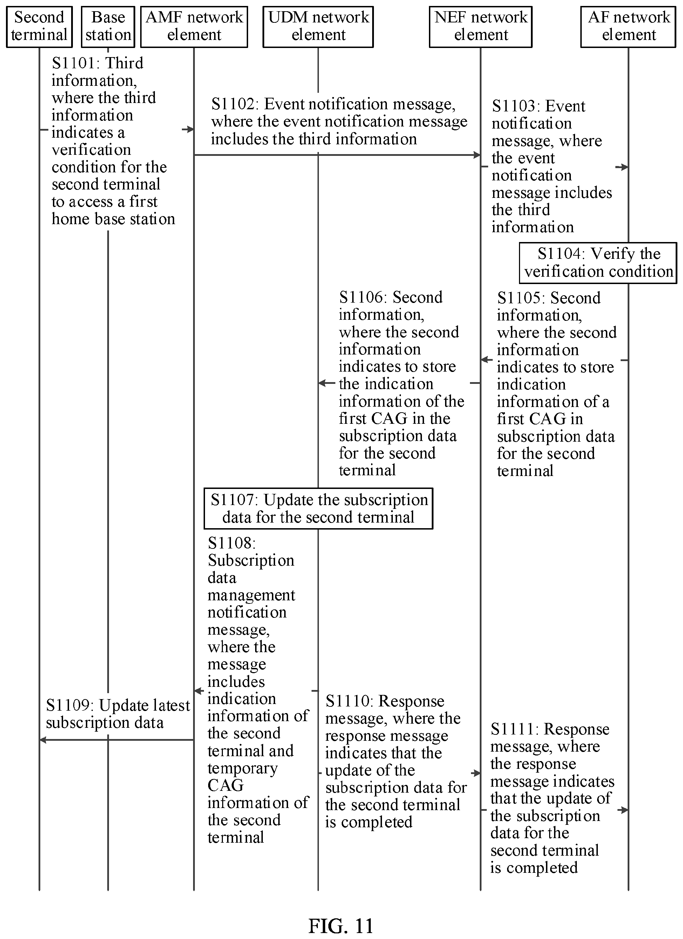

The following describes the technical solution in Embodiment 3 in detail with reference to FIG. 8 to FIG. 11. FIG. 8 and FIG. 9 show the first part of content in Embodiment 3. In FIG. 8, the management terminal indicates, to an AS through a user plane, the restriction condition for the visitor terminal to access the first home base station. In FIG. 9, the management terminal indicates, to an AF network element through a control plane, the restriction condition for the visitor terminal to access the first home base station. FIG. 10 and FIG. 11 show the second part of content in Embodiment 3. In FIG. 10, the visitor terminal obtains the temporary CAG information through a user plane. In FIG. 11, the visitor terminal obtains the temporary CAG information through a control plane.

FIG. 8 is an illustrative diagram of a communication method according to another embodiment of this application. As shown in FIG. 8, the method may include S801 and S802.

S801: A first terminal establishes a session with an AS.

In this embodiment, for specific implementations of S801, refer to S301. Details are not described herein again.

S802: The first terminal sends first information to the AS, where the first information indicates a restriction condition for a visitor terminal to access a first home base station.

In this embodiment, after the first terminal establishes the session with the AS, if there is a requirement for allowing the visitor terminal to access the first home base station, the first terminal may send the first information to the AS, to indicate the restriction condition for the visitor terminal to access the first home base station.

For example, the first information may include indication information of a first CAG and indication information of the restriction condition. The indication information of the first CAG may indicate a CAG corresponding to the first home base station, for example, the first CAG. For the indication information of the first CAG, refer to the related descriptions in S302. Details are not described herein again.

For example, the restriction condition for the visitor terminal to access the first home base station may include a key for use and/or a password for use, and the key may include a public key and a private key. When the restriction condition includes the key for use, the visitor terminal may generate encrypted data by using the public key. If the AS can decrypt the encrypted data by using the private key, it is considered that the visitor terminal can access the first home base station. When the restriction condition includes the password for use, and the visitor terminal enters correct password information, it is considered that the visitor terminal can access the first home base station, and the correct password information may be understood as the password for use in the restriction condition.

For example, the restriction condition may further include at least one of the following conditions: time of use, duration of use, location of use, or bandwidth for use. For details, refer to the related descriptions of the restriction condition in S302. Details are not described herein again.

In this embodiment, a management terminal may transmit, to an AF network element through a user plane, information about the first home base station and the restriction condition for the visitor terminal to access the first home base station.

FIG. 9 is an illustrative diagram of a communication method according to another embodiment of this application. As shown in FIG. 9, the method may include S901, S902, and S903.

S901: A first terminal sends first information to an AMF network element, where the first information indicates a restriction condition for a visitor terminal to access a first home base station.

For example, the first terminal may be a management terminal of the first home base station.

In this embodiment, the first terminal may send a NAS message to the AMF network element, where the NAS message may include the first information, and the first information indicates the restriction condition for the visitor terminal to access the first home base station. For the first information, refer to the related descriptions of the first information in S802. Details are not described herein again. Correspondingly, the AMF network element may receive the first information.

In some embodiments, the first terminal may send the first information to the AMF network element via an access network device. The access network device may be the first home base station, and the access network device is configured to forward the first information.

S902: The AMF network element sends an event notification message to an NEF network element, where the event notification message includes the first information.

For example, before the method provided in this embodiment is performed, or before S901 or S902 is performed, the NEF network element may send a first event subscription request to the AMF network element, for example, the NEF network element may send an event subscription (Namf_EventExposure_Subscribe) message to the AMF network element, to subscribe to an event from the AMF. The event is that, for example, any terminal updates, to a network, the restriction condition for the visitor terminal to access the first home base station. The any terminal may include the first terminal. It should be understood that, that the first terminal updates the restriction condition to the network is merely an example rather than a limitation, alternatively, another terminal may update the restriction condition to the network.

Therefore, after the AMF network element receives the first information, because the NEF network element has subscribed to the event, the AMF network element may send an event notification (Namf_EventExposure_Notify) message to the NEF network element, where the message may include the first information. Correspondingly, the NEF network element may receive the first information.

S903: The NEF network element sends an event notification message to an AF network element, where the event notification message includes the first information.

For example, before the method provided in this embodiment is performed, or before S901, S902, or S903 is performed, the AF network element may send a second event subscription request to the NEF network element, for example, the AF network element may send an event subscription (Nnef_EventExposure_Subscribe) message to the NEF network element, to subscribe to an event from the NEF. The event is that, for example, any terminal updates, to the network, the restriction condition for the visitor terminal to access the first home base station. The any terminal may include the first terminal. It should be understood that, that the first terminal updates the restriction condition to the network is merely an example rather than a limitation, alternatively, another terminal may update the restriction condition to the network.

For example, after receiving the second event subscription request sent by the AF network element, the NEF network element may send the first event subscription request to the AMF network element. Therefore, the subscription event in the first event subscription request may be related to the subscription event in the second event subscription request.

Therefore, after the NEF network element receives the first information, because the AF network element has subscribed to the event, the NEF network element may send an event notification (Nnef_EventExposure_Notify) message to the AF network element, where the message may include the first information.

In this embodiment, the management terminal may transmit, to the AF network element through a control plane, information about the first home base station and information about a second terminal allowed to access the first home base station.

FIG. 10 is an illustrative diagram of a communication method according to another embodiment of this application. As shown in FIG. 10, the method may include S1001 to S1008.

S1001: A second terminal establishes a session with an AS.

In this embodiment, when the second terminal needs to access a first home base station, the second terminal may establish a session with the AS, to obtain temporary CAG information. A manner in which the second terminal establishes the session with the AS is similar to the manner in which the first terminal establishes the session with the AS. For details, refer to the specific descriptions in S301. Details are not described herein again.

S1002: The second terminal sends third information to the AS, where the third information indicates a verification condition for the second terminal to access the first home base station.

In this embodiment, after the second terminal establishes the session with the AS, the second terminal may send the third information to the AS, to indicate the verification condition for the second terminal to access the first home base station. Correspondingly, the AS may receive the third information.

For example, the third information may include the verification condition for the second terminal to access the first home base station, indication information of a first CAG, and indication information of the second terminal, where the first CAG is a CAG corresponding to the first home base station. For the indication information of the first CAG and the indication information of the second terminal, refer to the related descriptions in the foregoing embodiment. Details are not described herein again.

In this embodiment, the second terminal may obtain the indication information of the first CAG from a management terminal of the first home base station, for example, an ID of the first CAG or a CAG ID broadcast by the first home base station. It should be understood that, when the verification condition reported by the second terminal corresponds to a restriction condition set by the first terminal, the second terminal may be allowed to access a network via the first home base station. For example, when the restriction condition includes a key for use, the verification condition may be encrypted data generated by the second terminal by using a public key. For example, the second terminal can encrypt the indication information of the first CAG and the indication information of the second terminal by using the public key. If the AS can decrypt the encrypted data by using a private key, it is considered that the verification condition meets the restriction condition; or if the AS cannot decrypt the verification condition by using the private key, it is considered that the verification condition does not meet the restriction condition. For example, when the restriction condition includes a password for use, the verification condition may be a password for use. If the password for use in the verification condition is consistent with the password for use in the restriction condition, it is considered that the verification condition meets the restriction condition; or if the password for use in the verification condition is inconsistent with the password for use in the restriction condition, it is considered that the verification condition does not meet the restriction condition.

S1003: The second terminal receives fourth information sent by the AS, where the fourth information indicates that the second terminal is allowed to access the first home base station.

In this embodiment, after receiving the third information, the AS may verify the verification condition indicated by the third information. If the verification condition meets the restriction condition, the AS sends the fourth information to the second terminal, to indicate that the second terminal is allowed to access the first home base station.

For example, the fourth information may include the temporary CAG information of the second terminal, and the temporary CAG information of the second terminal may include the CAG ID broadcast by the first home base station.

Correspondingly, the second terminal may receive the fourth information, and after receiving the fourth information, may select, based on the CAG ID in the fourth information, the first home base station or a CAG cell served by the first home base station to access the network.

S1004: An AF network element sends second information to an NEF network element, where the second information indicates to store the indication information of the first CAG in subscription data for the second terminal.

In this embodiment, after determining that the verification condition from the second terminal meets the restriction condition, the AS may notify the AF network element. A manner of transmission between the AS and the AF network element is not limited in this application. After learning that the verification condition of the second terminal meets the restriction condition, the AF network element may trigger an external parameter providing/granting/provisioning procedure, for example, the AF network element may determine a home operator network of the second terminal based on the indication information of the second terminal in the third information, send, to an NEF network element in the home operator network, a request message, for example, an external parameter create request (Nnef_ParameterProvision_Create request) message, where the request message may include the second information, the second information indicates to store the indication information of the first CAG in the subscription data for the second terminal, and the indication information of the first CAG is, for example, an identifier of the first CAG.

For example, the second information may include the indication information of the first CAG and the indication information of the second terminal.

For example, the second information may further include condition information for the second terminal to access the first home base station, for example, time of use, duration of use, location of use, or bandwidth for use.

In this embodiment, for related descriptions of the indication information of the first CAG, the indication information of the second terminal, and the restriction condition, refer to the related descriptions in S302. Details are not described herein again.

S1005: The NEF network element sends second information to a UDM network element, where the second information indicates to store the indication information of the first CAG in the subscription data for the second terminal.

S1006: The UDM network element updates the subscription data for the second terminal.

In this embodiment, for specific implementations of S1005 and S1006, respectively refer to S502 and S503. Details are not described herein again.

S1007: The UDM network element sends a response message to the NEF network element, where the response message indicates that the update of the subscription data for the second terminal is completed.

S1008: The NEF network element sends a response message to the AF network element, where the response message indicates that the update of the subscription data for the second terminal is completed.

In this embodiment, for specific implementations of S1007 and S1008, respectively refer to S506 and S507. Details are not described herein again.

In a possible implementation, when the subscription data stored in the UDM network element changes, the UDM network element may trigger a UCU procedure to update latest subscription data to the second terminal, as shown in the method in S504 and S505.

In this implementation, S1003 may be replaced with S504 and S505. To be specific, after S1001 and S1002 are performed, S1004 to S1008 may be directly performed, and S504 and S505 are then performed. Alternatively, after S1001 and S1002 are performed, S1004 to S1006 may be directly performed, and S1007 and S1008 are performed after S504 and S505. This is not specifically limited in this application.

In this embodiment, the second terminal may obtain the temporary CAG information through a user plane. After obtaining the temporary CAG information, the second terminal may register with and access a core network of the first home base station based on the temporary CAG information. For a registration process, refer to the related descriptions in FIG. 6. Details are not described herein again.

FIG. 11 is an illustrative diagram of a communication method according to another embodiment of this application. As shown in FIG. 11, the method may include S1101 to S1111.

S1101: A second terminal sends third information to an AMF network element, where the third information indicates a verification condition for the second terminal to access a first home base station.

In this embodiment, when the second terminal needs to access the first home base station, the second terminal may send a NAS message to the AMF network element, where the NAS message may include the third information, and the third information indicates the verification condition for the second terminal to access the first home base station. For the third information, refer to the related descriptions in S1002. Details are not described herein again.

In some embodiments, the first terminal may further send the third information to the AMF network element via an access network device. The access network device may be the first home base station, and the access network device is configured to forward the third information.

Correspondingly, the AMF network element may receive the third information.

S1102: The AMF network element sends an event notification message to an NEF network element, where the event notification message includes the third information.

For example, before the method provided in this embodiment is performed, or before S1101 or S1102 is performed, the NEF network element may send a first event subscription request to the AMF network element, for example, the NEF network element may send an event subscription (Namf_EventExposure_Subscribe) message to the AMF network element, to subscribe to an event from the AMF. The event may be that any terminal updates, to the network, the verification condition for visiting the first home base station. The any terminal may include the second terminal.

Therefore, after the AMF network element receives the third information, because the NEF network element has subscribed to the event, the AMF network element may send an event notification (Namf_EventExposure_Notify) message to the NEF network element, where the message may include the third information. Correspondingly, the NEF network element may receive the third information.

S1103: The NEF network element sends an event notification message to an AF network element, where the event notification message includes the third information.

For example, before the method provided in this embodiment is performed, or before S1101, S1102, or S1103 is performed, the AF network element may send a second event subscription request to the NEF network element, for example, the AF network element may send an event subscription (Nnef_EventExposure_Subscribe) message to the NEF network element, to subscribe to an event from the NEF. The event is that, for example, any terminal updates, to the network, the verification condition for visiting the first home base station. The any terminal may include the second terminal.

For example, after receiving the second event subscription request sent by the AF network element, the NEF network element may send the first event subscription request to the AMF network element. Therefore, the subscription event in the first event subscription request may be related to the subscription event in the second event subscription request.

Therefore, after the NEF network element receives the third information, because the AF network element has subscribed to the event, the NEF network element may send an event notification (Nnef_EventExposure_Notify) message to the AF network element, where the message may include the third information. Correspondingly, the AF network element may receive the third information.

S1104: The AF network element verifies the verification condition.

In this embodiment, after receiving the third information, the AF network element may verify the verification condition in the third information, to determine whether the second terminal is allowed to access the first home base station. When the verification condition reported by the second terminal corresponds to a restriction condition set by the first terminal, the second terminal may be allowed to access a network via the first home base station. In this embodiment, for a manner in which the AF network element verifies the verification condition, refer to the related descriptions in S1002. Details are not described herein again.

S1105: An AF network element sends second information to an NEF network element, where the second information indicates to store the indication information of the first CAG in subscription data for the second terminal.

In this embodiment, after determining that the verification condition from the second terminal meets the restriction condition, the AF network element may trigger an external parameter providing/granting/provisioning procedure, and send the second information to the NEF network element, where the second information indicates to store the indication information of the first CAG in the subscription data for the second terminal.

In this embodiment, for specific implementations of S1105, refer to S1004. Details are not described herein again.

S1106: The NEF network element sends second information to a UDM network element, where the second information indicates to store the indication information of the first CAG in the subscription data for the second terminal.

S1107: The UDM network element updates the subscription data for the second terminal.

S1108: The UDM network element sends a subscription data management notification message to the AMF network element, where the message includes indication information of the second terminal and temporary CAG information for the second terminal.

S1109: The AMF network element updates latest subscription data to the second terminal.

S1110: The UDM network element sends a response message to the NEF network element, where the response message indicates that the update of the subscription data for the second terminal is completed.

S1111: The NEF network element sends a response message to the AF network element, where the response message indicates that the update of the subscription data for the second terminal is completed.

In this embodiment, for specific implementations of S1106 to S1111, refer to S502 to S507. Details are not described herein again.

In this embodiment, the second terminal may obtain the temporary CAG information through a control plane. After obtaining the temporary CAG information, the second terminal may register with and access a core network of the first home base station based on the temporary CAG information. For a registration process, refer to the related descriptions in FIG. 6. Details are not described herein again.

In this embodiment, a management terminal may set, in a first function network element, a static restriction condition for the visitor terminal to access the first home base station. In this way, when the second terminal provides the verification condition for the first function network element, the verification condition may be verified by using the restriction condition. If the verification condition meets the restriction condition, the AS may send the temporary CAG information to the second terminal, so that the second terminal can obtain the temporary CAG information; or the AF network element triggers the external parameter providing procedure. In this way, the UDM network element can store the temporary CAG information in the subscription data for the second terminal, and update the latest subscription data to the second terminal through a UCU procedure, so that the second terminal obtains the temporary CAG information. In this way, the second terminal can access the first home base station to obtain a network service. In this embodiment, the visitor terminal may actively trigger a procedure of obtaining the temporary CAG information. Provided that the visitor terminal meets the restriction condition set by the management terminal of the first home base station, the visitor terminal may trigger the procedure at any moment when the temporary CAG information needs to be used, to obtain the temporary CAG information. This improves flexibility of obtaining the temporary CAG information by the visitor terminal.

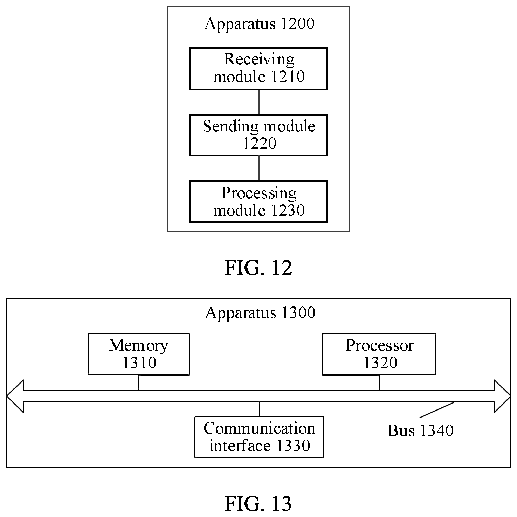

FIG. 12 is a diagram of a structure of a communication apparatus according to an embodiment of this application. As shown in FIG. 12, the apparatus 1200 may include a receiving module 1210, a sending module 1220, and a processing module 1230.

In a possible implementation, the apparatus 1200 may be configured to implement the steps/operations performed by the first terminal or the AS in FIG. 3.

For example, when the apparatus 1200 is configured to implement the method implemented by the first terminal in FIG. 3, one or more of the receiving module 1210, the sending module 1220, and the processing module 1230 may be configured to implement the operation performed by the first terminal in S301, and the sending module 1220 may be configured to implement the operation performed by the first terminal in S302.

For example, when the apparatus 1200 is configured to implement the method implemented by the AS in FIG. 3, one or more of the receiving module 1210, the sending module 1220, and the processing module 1230 may be configured to implement the operation performed by the AS in S301, and the receiving module 1210 may be configured to implement the operation performed by the AS in S302.

In a possible implementation, the apparatus 1200 may be configured to implement the steps/operations performed by the first terminal, the AMF network element, the NEF network element, or the AF network element in FIG. 4.

For example, when the apparatus 1200 is configured to implement the method implemented by the first terminal in FIG. 4, the sending module 1220 may be configured to implement the operation performed by the first terminal in S401.

For example, when the apparatus 1200 is configured to implement the method implemented by the AMF network element in FIG. 4, the receiving module 1210 may be configured to implement the operation performed by the AMF network element in S401, and the sending module 1220 may be configured to implement the operation performed by the AMF network element in S402.

For example, when the apparatus 1200 is configured to implement the method implemented by the NEF network element in FIG. 4, the receiving module 1210 may be configured to implement the operation performed by the NEF network element in S402, and the sending module 1220 may be configured to implement the operation performed by the NEF network element in S403.

For example, when the apparatus 1200 is configured to implement the method implemented by the AF network element in FIG. 4, the receiving module 1210 may be configured to implement the operation performed by the AF network element in S403.

Optionally, the apparatus 1200 may further implement the steps/operations performed by the first home base station in FIG. 4.

In a possible implementation, the apparatus 1200 may be configured to implement the steps/operations performed by the AF network element, the NEF network element, the UDM network element, the AMF network element, or the second terminal in FIG. 5.

For example, when the apparatus 1200 is configured to implement the method implemented by the AF network element in FIG. 5, the receiving module 1210 may be configured to implement the operation performed by the AF network element in S507, and the sending module 1220 may be configured to implement the operation performed by the AF network element in S501.

For example, when the apparatus 1200 is configured to implement the method implemented by the NEF network element in FIG. 5, the receiving module 1210 may be configured to implement the operations performed by the NEF network element in S501 and S506, and the sending module 1220 may be configured to implement the operations performed by the NEF network element in S502 and S507.

For example, when the apparatus 1200 is configured to implement the method implemented by the UDM network element in FIG. 5, the receiving module 1210 may be configured to implement the operation performed by the UDM network element in S502, the sending module 1220 may be configured to implement the operations performed by the UDM network element in S504 and S506, and the processing module 1230 may be configured to implement S503.

For example, when the apparatus 1200 is configured to implement the method implemented by the AMF network element in FIG. 5, the receiving module 1210 may be configured to implement the operation performed by the AMF network element in S504, and the sending module 1220 may be configured to implement the operation performed by the AMF network element in S505.

For example, when the apparatus 1200 is configured to implement the method implemented by the second terminal in FIG. 5, the receiving module 1210 may be configured to implement the operation performed by the second terminal in S505.

Optionally, the apparatus 1200 may further implement the steps/operations performed by the base station in FIG. 5.

In a possible implementation, the apparatus 1200 may be configured to implement the steps/operations performed by the second terminal, the first home base station, the AMF network element, the AUSF network element, or the UDM network element in FIG. 6.

For example, when the apparatus 1200 is configured to implement the method implemented by the second terminal in FIG. 6, the receiving module 1210 may be configured to implement the operation performed by the second terminal in S608, the sending module 1220 may be configured to implement the operation performed by the second terminal in S601, and one or more of the receiving module 1210, the sending module 1220, and the processing module 1230 may be configured to implement the operation performed by the second terminal in S605.

For example, when the apparatus 1200 is configured to implement the method implemented by the first home base station in FIG. 6, the receiving module 1210 may be configured to implement the operations performed by the first home base station in S601 and S607, the sending module 1220 may be configured to implement the operations performed by the first home base station in S603 and S608, and the processing module 1230 may be configured to implement S602.

For example, when the apparatus 1200 is configured to implement the method implemented by the AMF network element in FIG. 6, the receiving module 1210 may be configured to implement the operation performed by the AMF network element in S603, the sending module 1220 may be configured to implement the operation performed by the AMF network element in S607, the processing module 1230 may be configured to implement S604, and one or more of the receiving module 1210, the sending module 1220, and the processing module 1230 may be configured to implement the operations performed by the AMF network element in S605 and S606.

In an example, when the apparatus 1200 is configured to implement the method implemented by the AUSF network element in FIG. 6, one or more of the receiving module 1210, the sending module 1220, and the processing module 1230 may be configured to implement the operation performed by the AUSF network element in S605.

In an example, when the apparatus 1200 is configured to implement the method implemented by the UDM network element in FIG. 6, one or more of the receiving module 1210, the sending module 1220, and the processing module 1230 may be configured to implement the operations performed by the UDM network element in S605 and S606.

In a possible implementation, the apparatus 1200 may be configured to implement the steps/operations performed by the first terminal, the second AMF network element, the second function network element, the second terminal, the first AMF network element, the AUSF network element, or the UDM network element in FIG. 7.

For example, when the apparatus 1200 is configured to implement the method implemented by the first terminal in FIG. 7, the sending module 1220 may be configured to implement the operation performed by the first terminal in S701.

For example, when the apparatus 1200 is configured to implement the method implemented by the second AMF network element in FIG. 7, the receiving module 1210 may be configured to implement the operation performed by the second AMF network element in S701, and the sending module 1220 may be configured to implement the operation performed by the second AMF network element in S702.

For example, when the apparatus 1200 is configured to implement the method implemented by the second function network element in FIG. 7, the receiving module 1210 may be configured to implement the operations performed by the second function network element in S702 and S705, the sending module 1220 may be configured to implement the operation performed by the second function network element in S706, and the processing module 1230 may be configured to implement the operation performed by the second function network element in S703.

For example, when the apparatus 1200 is configured to implement the method implemented by the second terminal in FIG. 7, the receiving module 1210 may be configured to implement the operation performed by the second terminal in S711, the sending module 1220 may be configured to implement the operation performed by the second terminal in S704, and one or more of the receiving module 1210, the sending module 1220, and the processing module 1230 may be configured to implement the operation performed by the second terminal in S709.

For example, when the apparatus 1200 is configured to implement the method implemented by the first AMF network element in FIG. 7, the receiving module 1210 may be configured to implement the operations performed by the first AMF network element in S704, S706, and S710, the sending module 1220 may be configured to implement the operations performed by the first AMF network element in S705 and S711, the processing module 1230 may be configured to implement the operations performed by the first AMF network element in S707 and S708, and one or more of the receiving module 1210, the sending module 1220, and the processing module 1230 may be configured to implement the operations performed by the first AMF network element in S709 and S710.

In an example, when the apparatus 1200 is configured to implement the method implemented by the AUSF network element in FIG. 7, one or more of the receiving module 1210, the sending module 1220, and the processing module 1230 may be configured to implement the operation performed by the AUSF network element in S709.

In an example, when the apparatus 1200 is configured to implement the method implemented by the UDM network element in FIG. 7, one or more of the receiving module 1210, the sending module 1220, and the processing module 1230 may be configured to implement the operations performed by the AUSF network element in S709 and S710.

Optionally, the apparatus 1200 may further implement the steps/operations performed by the first home base station in FIG. 7.

In a possible implementation, the apparatus 1200 may be configured to implement the steps/operations performed by the first terminal or the AS in FIG. 8.

For example, when the apparatus 1200 is configured to implement the method implemented by the first terminal in FIG. 8, one or more of the receiving module 1210, the sending module 1220, and the processing module 1230 may be configured to implement the operation performed by the first terminal in S801, and the sending module 1220 may be configured to implement the operation performed by the first terminal in S802.

For example, when the apparatus 1200 is configured to implement the method implemented by the AS in FIG. 8, one or more of the receiving module 1210, the sending module 1220, and the processing module 1230 may be configured to implement the operation performed by the AS in S801, and the receiving module 1210 may be configured to implement the operation performed by the AS in S802.

In a possible implementation, the apparatus 1200 may be configured to implement the steps/operations performed by the first terminal, the AMF network element, the NEF network element, or the AF network element in FIG. 9.

For example, when the apparatus 1200 is configured to implement the method implemented by the first terminal in FIG. 9, the sending module 1220 may be configured to implement the operation performed by the first terminal in S901.

For example, when the apparatus 1200 is configured to implement the method implemented by the AMF network element in FIG. 9, the receiving module 1210 may be configured to implement the operation performed by the AMF network element in S901, and the sending module 1220 may be configured to implement the operation performed by the AMF network element in S902.

For example, when the apparatus 1200 is configured to implement the method implemented by the NEF network element in FIG. 9, the receiving module 1210 may be configured to implement the operation performed by the NEF network element in S902, and the sending module 1220 may be configured to implement the operation performed by the NEF network element in S903.

For example, when the apparatus 1200 is configured to implement the method implemented by the AF network element in FIG. 9, the receiving module 1210 may be configured to implement the operation performed by the AF network element in S903.

Optionally, the apparatus 1200 may further implement the steps/operations performed by the first home base station in FIG. 9.

In a possible implementation, the apparatus 1200 may be configured to implement the steps/operations performed by the second terminal, the AS, the UDM network element, the NEF network element, or the AF network element in FIG. 10.

For example, when the apparatus 1200 is configured to implement the method implemented by the second terminal in FIG. 10, one or more of the receiving module 1210, the sending module 1220, and the processing module 1230 may be configured to implement the operation performed by the second terminal in S1001, the receiving module 1210 may be configured to implement the operation performed by the second terminal in S1003, and the sending module 1220 may be configured to implement the operation performed by the second terminal in S1002.

For example, when the apparatus 1200 is configured to implement the method implemented by the AS in FIG. 10, one or more of the receiving module 1210, the sending module 1220, and the processing module 1230 may be configured to implement the operation performed by the AS in S1001, the receiving module 1210 may be configured to implement the operation performed by the AS in S1002, and the sending module 1220 may be configured to implement the operation performed by the AS in S1003.

For example, when the apparatus 1200 is configured to implement the method implemented by the AF network element in FIG. 10, the receiving module 1210 may be configured to implement the operation performed by the AF network element in S1008, and the sending module 1220 may be configured to implement the operation performed by the AF network element in S1004.

For example, when the apparatus 1200 is configured to implement the method implemented by the NEF network element in FIG. 10, the receiving module 1210 may be configured to implement the operations performed by the NEF network element in S1004 and S1007, and the sending module 1220 may be configured to implement the operations performed by the NEF network element in S1005 and S1008.

For example, when the apparatus 1200 is configured to implement the method implemented by the UDM network element in FIG. 10, the receiving module 1210 may be configured to implement the operation performed by the UDM network element in S1005, the sending module 1220 may be configured to implement the operation performed by the UDM network element in S1007, and the processing module 1230 may be configured to implement the operation performed by the UDM network element in S1006.

Optionally, the apparatus 1200 may further implement the steps/operations performed by the base station or the AMF in FIG. 10.

In a possible implementation, the apparatus 1200 may be configured to implement the steps/operations performed by the second terminal, the AMF network element, the UDM network element, the NEF network element, or the AF network element in FIG. 11.

For example, when the apparatus 1200 is configured to implement the method implemented by the second terminal in FIG. 11, the receiving module 1210 may be configured to implement the operation performed by the second terminal in S1109, and the sending module 1220 may be configured to implement the operation performed by the second terminal in S1101.

For example, when the apparatus 1200 is configured to implement the method implemented by the AMF network element in FIG. 11, the receiving module 1210 may be configured to implement the operations performed by the AMF network element in S1101 and S1108, and the sending module 1220 may be configured to implement the operations performed by the AMF network element in S1102 and S1109.

For example, when the apparatus 1200 is configured to implement the method implemented by the UDM network element in FIG. 11, the receiving module 1210 may be configured to implement the operation performed by the UDM network element in S1106, the sending module 1220 may be configured to implement the operations performed by the UDM network element in S1108 and S1110, and the processing module 1230 may be configured to implement the operation performed by the UDM network element in S1107.

For example, when the apparatus 1200 is configured to implement the method implemented by the NEF network element in FIG. 11, the receiving module 1210 may be configured to implement the operations performed by the NEF network element in S1102, S1105, and S1110, and the sending module 1220 may be configured to implement the operations performed by the NEF network element in S1103, S1106, and S1111.

For example, when the apparatus 1200 is configured to implement the method implemented by the AF network element in FIG. 11, the receiving module 1210 may be configured to implement the operations performed by the AF network element in S1103 and S1111, the sending module 1220 may be configured to implement the operation performed by the AF network element in S1105, and the processing module 1230 may be configured to implement the operation performed by the AF network element in S1104.

FIG. 13 is a diagram of a structure of a communication apparatus according to another embodiment of this application. The apparatus 1300 shown in FIG. 13 may be configured to implement the method performed by the first terminal, the second terminal, or each core network element in any one of the foregoing embodiments.

As shown in FIG. 13, the apparatus 1300 in this embodiment includes a memory 1310, a processor 1320, a communication interface 1330, and a bus 1340. The memory 1310, the processor 1320, and the communication interface 1330 implement mutual communication connections by using the bus 1340.

The memory 1310 may be a read-only memory (read-only memory, ROM), a static storage device, a dynamic storage device, or a random access memory (random access memory, RAM). The memory 1310 may store a program. When the program stored in the memory 1310 is executed by the processor 1320, the processor 1320 is configured to perform the steps/operations performed by the first terminal, the second terminal, or each core network element in any one of the foregoing embodiments.

The processor 1320 may be a general-purpose central processing unit (central processing unit, CPU), a microprocessor, an application-specific integrated circuit (application-specific integrated circuit, ASIC), or one or more integrated circuits, and is configured to execute a related program, to implement the communication method shown in the method embodiments of this application.

The processor 1320 may alternatively be an integrated circuit chip, and has a signal processing capability. During implementation, the steps in the communication method in the method embodiments of this application may be completed by using an integrated logic circuit of hardware in the processor 1320 or by using instructions in a form of software.

The foregoing processor 1320 may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1310. The processor 1320 reads information in the memory 1310, and completes, in combination with hardware of the processor 1320, functions that need to be performed by units included in the communication apparatus in this application, for example, may perform the steps/functions performed by the first terminal, the second terminal, or each core network element in the foregoing embodiments.

Optionally, the memory 1310 and the processor 1320 may be integrated together.

The communication interface 1330 may use, but not limited to, a transceiver apparatus like a transceiver, to implement communication between the apparatus 1300 and another device or apparatus.

The bus 1340 may include a path for transmitting information between various components (for example, the memory 1310, the processor 1320, and the communication interface 1330) of the apparatus 1300.

Some embodiments of this application further provide a computer program product. When the computer program product runs on a processor, the method shown in the foregoing embodiments may be implemented. Some embodiments of this application further provide a computer-readable storage medium. The computer-readable storage medium includes computer instructions. When the computer instructions are run on a processor, the method shown in the foregoing embodiments may be implemented.

It should be noted that the modules or components shown in the foregoing embodiments may be configured as one or more integrated circuits for implementing the foregoing methods, for example, one or more application-specific integrated circuits (application-specific integrated circuit, ASIC), one or more microprocessors (digital signal processors, DSPs), or one or more field programmable gate arrays (field programmable gate arrays, FPGAs). For another example, when one of the foregoing modules is implemented in a form in which a processing element invokes program code, the processing element may be a general-purpose processor, for example, a central processing unit (central processing unit, CPU) or another processor that can invoke the program code, for example, a controller. For another example, the modules may be integrated and implemented in a form of a system-on-a-chip (system-on-a-chip, SoC).

All or some of the foregoing embodiments may be implemented by using software, hardware, firmware, software modules, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid State Disk (SSD)), or the like.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A communication method, wherein the method is applied to a first function network element, and the method comprises:
receiving first information from a first terminal, wherein the first information indicates a second terminal allowed to access a first home base station, and the first terminal is a management terminal of the first home base station; and
sending second information, wherein the second information indicates to store indication information of a first closed access group in subscription data for the second terminal, and the first closed access group is a closed access group corresponding to the first home base station.

2. The method according to claim 1, wherein the first information comprises the indication information of the first closed access group and indication information of the second terminal.

3. The method according to claim 1 or 2, wherein the first information further comprises a restriction condition for the second terminal to access the first home base station.

4. A communication method, wherein the method is applied to a first function network element, and the method comprises:
receiving first information from a first terminal, wherein the first information indicates a restriction condition for a visitor terminal to access a first home base station, and the first terminal is a management terminal of the first home base station;
receiving third information from a second terminal, wherein the third information comprises a verification condition for the second terminal to access the first home base station, indication information of a first closed access group, and indication information of the second terminal, and the first closed access group is a closed access group corresponding to the first home base station; and
sending second information when the verification condition meets the restriction condition, wherein the second information indicates to store the indication information of the first closed access group in subscription data for the second terminal.

5. The method according to claim 4, wherein the first information comprises the indication information of the first closed access group and indication information of the restriction condition.

6. The method according to any one of claims 3 to 5, wherein the restriction condition comprises at least one of the following conditions: time of use, duration of use, location of use, key for use, password for use, or bandwidth for use.

7. A communication method, wherein the method is applied to a first terminal, and the method comprises:
determining first information, wherein the first information indicates a second terminal allowed to access a first home base station, and the first terminal is a management terminal of the first home base station; and
sending the first information to a first function network element.

8. The method according to claim 7, wherein the first information comprises indication information of a first closed access group and indication information of the second terminal, and the first closed access group is a closed access group corresponding to the first home base station.

9. The method according to claim 7 or 8, wherein the first information further comprises a restriction condition for the second terminal to access the first home base station.

10. A communication method, wherein the method is applied to a first terminal, and the method comprises:
determining first information, wherein the first information indicates a restriction condition for a visitor terminal to access a first home base station, and the first terminal is a management terminal of the first home base station; and
sending the first information to a first function network element.

11. The method according to claim 10, wherein the first information comprises indication information of a first closed access group and indication information of the restriction condition, and the first closed access group is a closed access group corresponding to the first home base station.

12. The method according to any one of claims 9 to 11, wherein the restriction condition comprises at least one of the following conditions: time of use, duration of use, location of use, key for use, password for use, or bandwidth for use.

13. A communication method, wherein the method is applied to a second terminal, and the method further comprises:
sending third information to a first function network element, wherein the third information comprises a verification condition for the second terminal to access a first home base station, indication information of a first closed access group, and indication information of the second terminal, and the first closed access group is a closed access group corresponding to the first home base station; and
receiving fourth information from the first function network element, wherein the fourth information indicates that the second terminal is allowed to access the first home base station.

14. The method according to claim 13, wherein the indication information of the first closed access group comprises an identifier of the first closed access group and/or an identifier of a first terminal, the identifier of the first terminal is used to determine the identifier of the first closed access group, and the first terminal is a management terminal of the first home base station.

15. A communication method, wherein the method is applied to an access and mobility management function AMF network element, and the method comprises:
sending fifth information to a second function network element, wherein the fifth information is used to request to determine whether a second terminal is allowed to access a first home base station, and the fifth information comprises indication information of the second terminal; and
receiving sixth information from the second function network element, wherein the sixth information indicates whether the second terminal is allowed to access the first home base station.

16. The method according to claim 15, wherein the fifth information further comprises indication information of a first closed access group, and the first closed access group is a closed access group corresponding to the first home base station.

17. The method according to claim 15 or 16, wherein the sixth information comprises indication information indicating whether the second terminal is allowed to access the first home base station and/or information about a closed access group that the second terminal is allowed to access.

18. The method according to claim 17, wherein when the sixth information comprises the information about the closed access group that the second terminal is allowed to access, the method further comprises:
when the information about the closed access group that the second terminal is allowed to access comprises closed access group information corresponding to the first home base station, allowing the second terminal to access the first home base station.

19. A communication method, wherein the method is applied to a second function network element, and the method comprises:
receiving fifth information from an access and mobility management function AMF network element, wherein the fifth information is used to request to determine whether a second terminal is allowed to access a first home base station, and the fifth information comprises indication information of the second terminal; and
sending sixth information to the AMF network element, wherein the sixth information indicates whether the second terminal is allowed to access the first home base station.

20. The method according to claim 19, wherein the fifth information further comprises indication information of a first closed access group, and the first closed access group is a closed access group corresponding to the first home base station.

21. The method according to claim 20, wherein the sixth information comprises indication information indicating whether the second terminal is allowed to access the first home base station and/or information about a closed access group that the second terminal is allowed to access.

22. The method according to claim 20 or 21, wherein before sending the sixth information to the AMF network element, the method further comprises:
determining, based on the fifth information and the information about the closed access group that the second terminal is allowed to access, whether the second terminal is allowed to access the first home base station.

23. The method according to claim 22, wherein the method further comprises:
receiving first information from a first terminal, wherein the first information indicates a second terminal allowed to access the first home base station; and
determining, based on the first information, information about a closed access group that the second terminal is allowed to access.

24. The method according to claim 23, wherein the first information comprises the indication information of the first closed access group and indication information of the second terminal.

25. The method according to claim 23 or 24, wherein the first information further comprises a restriction condition for the second terminal to access the first home base station, wherein the restriction condition comprises at least one of the following conditions: time of use, duration of use, location of use, or bandwidth for use.

26. A communication system, comprising a communication device configured to perform the method according to any one of claims 1 to 25.

27. A communication apparatus, comprising a functional module configured to implement the method according to any one of claims 1 to 25.

28. A communication apparatus, comprising a processor, wherein the processor is coupled to a memory, the memory is configured to store a computer program, and when the processor invokes the computer program, the apparatus is caused to perform the method according to any one of claims 1 to 25.

29. A computer program product, comprising computer program code, wherein when the computer program code is run on a computer, the computer is caused to implement the method according to any one of claims 1 to 25.

30. A computer-readable medium, wherein the computer-readable medium stores program code to be executed by a computer, and the program code comprises instructions used to perform the method according to any one of claims 1 to 25.
